# EUROPEAN PATENT SPECIFICATION

(11) **EP 3 329 023 B1**
(45) Date of publication and mention of the grant of the patent: **15.04.2020**
(21) Application number: 16763948.3
(22) Date of filing: 29.07.2016
(51) Int. Cl.: C22B 7/00, C22B 3/00, C22B 3/24, C22B 3/44

(54) **PROCESS FOR RECOVERY AND RECYCLING OF MATERIALS CONSTITUTING MEMBRANES FOR SEPARATION OF HYDROGEN**
VERFAHREN ZUR RÜCKGEWINNUNG UND WIEDERVERWERTUNG VON MATERIALIEN, DIE MEMBRANEN ZUR TRENNUNG VON WASSERSTOFF BILDEN
PROCÉDÉ DE RÉCUPÉRATION ET DE RECYCLAGE DE MATÉRIAUX CONSTITUANT DES MEMBRANES DE SÉPARATION D'HYDROGÈNE

(30) Priority: 29.07.2015 IT UB20152588
(43) Date of publication of application: 06.06.2018
(73) Proprietor: KT - Kinetics Technology S.p.A., 00148 Roma (IT); Eco Recycling S.r.l., 00197 Rome (IT); Biomaterials&Engineering S.r.l., 67100 L Aquila (IT)
(72) Inventor: TORO, Luigi, I-00100 Roma (IT); PAGNANELLI, Francesca, I-00055 Ladispoli (RM) (IT); MOSCARDINI, Emanuela, I-00042 Anzio (RM) (IT); BALDASSARI, Ludovica Maria, I-00052 Cerveteri (RM) (IT); ALTIMARI, Pietro, I-80016 Marano di Napoli (NA) (IT); PALO, Emma, I-84091 Battipaglia (SA) (IT); SALLADINI, Annarita, Roseto degli Abruzzi (TE) (IT); IAQUANIELLO, Gaetano, I-00153 Roma (IT); VEGLIO', Francesco, I-65010 Spoltore (PE) (IT); ZUEVA, Svetlana, I-64026 Roseto degli Abruzzi (TE) (IT); DI RENZO, Alessia, I- 67043 Celano (AQ) (IT)
(74) Representative: Sarpi, Maurizio
(86) International application number: PCT/IB2016/054546
(87) International publication number: WO 2017/017647

(56) References cited:
- JP-A- 2007 297 655
- Y.LI ET AL: "Toward extensive application of Pd/ceramic memebranes for hydrogen separation:A case study on membranerecyclingand reuse in the fabrication of new membranes", INTERNATIONAL JOURNAL OF HYDROGEN ENERGY, vol. 40, 26 September 2014 (2014-09-26), pages 3528-3537, XP002756299,

## Description

### Summary of the invention

The present invention relates to the sector of separation of hydrogen by using semipermeable membranes and more in particular to a process for recovery and recycling of materials that constitute said membranes, with a significant saving in the overall cost. It comprises a hydrometallurgical leaching process that enables preservation of the integrity of the substrate with variable porosity, made of steel, of the tubular-membrane modules and at the same time enables maximum dissolution of the palladium and the silver that constitute the selective barrier of the modules themselves, and a subsequent step of extraction of the palladium and the silver leached during the hydrometallurgical treatment, with the production of a high-purity marketable fertilizer, such as calcium nitrate Ca(NO₃)₂.

### Introduction

The demand for hydrogen in the industrial sector is continuously expanding. This can put down to the high number of applications in which this element has a part. In particular, its use as energy carrier is proving increasingly more attractive, above all in the future perspective of an ecological energy economy. In this perspective, the advantage of using manufacturing technologies that are competitive both in terms of productivity over other fuels and in terms of costs is evident.

In this scenario, it is possible to understand the attention paid to research for technical and economic optimization of methods for separation of hydrogen, that meet the needs for purity, versatility, and low cost required by the numerous final applications of this element. One of the most promising areas for meeting these needs is the use of semipermeable membranes for separation of H₂, and hence its production through membrane reactors.

### Subject of the invention

The purpose of the present invention is principally to provide a process that is able to recover the substrate with variable porosity, made of AISI 316L steel, of the tubular-membrane modules (which represents the preponderant item of cost of the membrane module) and then to extract the palladium and the silver, which constitute the selective barrier of the module, that are leached during the hydrometallurgical treatment. The purpose is to reduce the cost of the modules as a whole through a process of recovery and recycling of the various components.

The membrane samples on which experimentation was conducted, and to which reference will be made in the sequel of the description, come from a common three-element composite module constituted by: a porous asymmetrical metal substrate made of 316L stainless steel, an intermetal barrier (of a thickness of approximately 2 µm) made of TiN, and a selective layer (of a thickness of approximately 3 µm) made of Pd/Ag alloy (23wt% of Ag).

The amount of noble metals that adhere to the surface of the porous substrate is extremely small. As regards the intermetal barrier, it was decided to accept a complete removal thereof in the case where it got damaged by the dissolution of the palladium-silver layer. Consequently, it is be necessary to envisage a redeposition thereof on the recovered substrate prior to deposition of the new Pd and Ag layer. Given the intrinsic value of the modules and, as has been said, the increasingly widespread attention to an energy economy with low environmental impact, there may be appreciated the advantageous aspects linked to the recovery of these materials when they become elements that can no longer be used. The service life of the membranes, in fact, terminates when the permeate no longer responds to the design specifications in terms of purity and composition. Deterioration of the modules affects above all the membrane. It loses selectivity on account of various factors, such as creation of cracks and wrinkling on the surface, sometimes resulting from detachment of this layer from the underlying substrate.

Envisaging recycling of the substrate, all the more if jointly with that of the intermetal barrier, entails a significant saving in the overall cost of the modules and would produce a positive impact on future industrialization of these composite materials.

The target set has hence been to identify a hydrometallurgical leaching process that will enable preservation of the integrity of the metal substrate (quantified through minimization of iron in solution) and consequently maximization of the yield of dissolution of palladium and silver. The reagents chosen and the operating conditions have been sought so as to satisfy these requirements.

Known from Y.U., et al.: "Toward extensive application of Pd/ceramic membranes for hydrogen separation: A case study on membrane recycling and reuse in the fabrication of new membranes", INTERNATIONAL JOURNAL OF HYDROGEN ENERGY, vol. 40, 26 September 2014, pages 3528-3537, is a research study on possible recycling of palladium membranes that have reached the end of their service life for producing new membranes with the palladium that has been recovered.

### State of the art: Pd and Ag leaching

The research work got under way considering the most up-to-date technology of leaching of the metals of interest (palladium and silver) from the substrates used in particular in the studies reported in the literature. The two sections below are dedicated, respectively, to the state of the art regarding palladium and the state of the art regarding silver.

### State of the art of Pd leaching

PGMs (Platinum-Group Metals) are precius materials used in various industrial fields, but their availability as resource is very limited. The process of recovery of these metals from residues or secondary materials hence calls for particular attention and appropriate evaluation. In addition to the low availability, the need for a saving in costs and an increased efficiency in their use renders even more understandable the search for an optimized process of recovery. This is witnessed by the presence of numerous scientific papers dedicated to this subject. PGMs, i.e., metals such as palladium, platinum, and rhodium, find wide use above all as catalysts in the automotive sector in catalytic converters. Approximately 50% of the PGM market is, in fact, dedicated to these applications. Many researchers report also the study of extraction of palladium from waste PCBs (Printed Circuit Boards).

Recovery of these elements is usually conducted through pyrometallurgical and hydrometallurgical methods. In the former methods, however, greater problems of an environmental type are encountered. Hydrometallurgical processes, at which the majority of the research activity is currently aimed, are more controllable and have a lower environmental impact. They moreover involve lower capital and operating costs.

There have recently been proposed various extraction processes, all of which are based upon leaching with hydrochloric acid and using a wide variety of oxidizing agents. Amongst the most common, there may be cited hydrogen peroxide, perchloric acid, nitric acid, hypochlorite, and chlorate. Considering the use of powerful oxidizing agents, particular attention has been paid also to the choice of the oxidant itself also in relation to its potential environmental impact. Many studies report the use of H₂O₂ as oxidizing agent and sometimes propose substitution of an amount of HCl with NaClO as promoter, with the purpose of rendering the solution less aggressive, but in any case guaranteeing the necessary concentration of chlorides. In fact, PGMs, in a medium constituted by HCl, tend to form complexes with the acid. Since the leaching reaction is endothermic, moreover, this will be favoured by high temperatures that remain at around 60-90°C.

Described hereinafter is the complex of reactions that participate in the process of dissolution of palladium in HCl, using H₂O₂ as oxidizing agent.

In the HCl-H₂O₂ solution the following reactions take place:

Pd+H₂O₂+4HCl↔H₂PdCl₄+2H₂O

Anode: Pd+4Cl⁻↔PdCl₄⁻²+2e⁻ E⁰=-0.62 V

Cathode: H₂O₂+2H⁺+2e⁻↔2H₂O E⁰=1.76 V

H₂O₂ can easily react with HCl to form Cl₂ and water:

H₂O₂+2HCl↔Cl₂+2H₂O ΔE=0.51 V

Then, the activated compounds formed (e.g. Cl₂) in solution, can react with palladium via the following reactions:

Pd+2HCl+Cl_{2(aq)} ↔H₂PdCl₄

Anode: Pd+4Cl⁻↔PdCl₄⁻²+2e⁻ E⁰=-0.62 V

Cathode: Cl_{2(aq)}+2e⁻↔2Cl⁻_{(aq)} E⁰=1.396 V

There may take place also the following reaction: Pd+HClO+3HCl↔H₂PdCl₄+H₂0

Anode: Pd+4Cl⁻↔PdCl₄⁻²+2e⁻ E⁰=-0.62 V

Cathode: HClO+2H⁺+2e⁻↔Cl_{2(g)}+2H₂O E⁰=1.63 V

In the NaClO-HCl solution, the following reactions take place:

NaClO+HCl↔HClO+NaCl

Pd+HClO+3HCl↔H₂PdCl₄+H₂O

Anode: Pd+4Cl⁻↔PdCl₄⁻²+2e⁻ E⁰=-0.62 V

Cathode: HClO+2H⁺+2e⁻↔Cl_{2(g)}+2H₂O E⁰=1.63 V

Considering the equilibrium between Cl₂ and HClO in an HCl solution (Cl_{2(aq)}+H₂O↔HClO+HCl, the following reaction may take place:

Pd+2HCl+Cl_{2(aq)} ↔H₂PdCl₄

Anode: Pd+4Cl⁻↔PdCl₄⁻²+2e⁻ E⁰=-0.62 V

Cathode: Cl_{2(aq)}+2e⁻↔2Cl⁻_{(aq)} E⁰=1.396 V

As may be noted, the set of reactions that participate in the process is rather complex, and this renders evolution of leaching sufficiently demanding.

In the extraction from PCBs, the study conducted by A. Behnamfard, *et al.,* 2013, provides the following optimal leaching reagents and conditions: NaClO-HCl-H₂O₂ with a concentration of 10vol%-5M-1vol% at the 2 2 temperature of 63°C and with a contact time of 3 h. With these specifications, a percentage of extracted palladium of 97.9% was reached. Prior to the leaching step, the sample was ground, after prior manual removal of the aluminium-based and electronic components.

Catalytic converters of motor vehicles are, as mentioned, one of the most sought-for sources for recovery of precious metals. The research conducted by Sri Harjanto, *et. al,* 2005, tested various leaching solutions, leading to the following percentages of extracted palladium: HCl-H₂O₂ (11.6M-1vol%), at 65°C for 3 h, 100% of Pd dissolved; NaClO-HCl-H₂O₂ (3vol%-5kmol/m³-1vol%) in bidistilled H₂O at 65°C for 3 h, 98.7% of Pd dissolved; NaClO-HCl (3vol%-5kmol/m³) in bidistilled water at 65°C for 3 h, 96.6% of Pd dissolved.

The study conducted by D. Jimenez de Aberasturi, et *al.,* 2011, proposes the use of solutions with different oxidizing agents, in particular H₂O₂ and HNO₃, in a medium constituted by HCl, H₂SO₄ and adding NH₄F, to favour attack of the interphases between the PGMs and the catalytic converter on the part of the F⁻ ions. It was found for both cases that the percentage of extracted palladium is a little higher than 95%. The specifications of the two solutions tested are for both a temperature of 90°C and a leaching time of 6 h, while the concentrations of the reagents used are for HCl-HNO₃-H₂SO₄ 12M-15M-18M, and for HCl-H₂O₂-H₂SO₄ 12M-110vol-18M.

The research by C. A. Nogueira, et *al.,* 2014, led to identification of the Cu⁺² species as good oxidant in the palladium-extraction process, at high concentrations of the Cl⁻ ions. The results obtained from this research led to definition of the following optimal process conditions: HCl-CuCl·2H₂O (6M-0.3M [Cu⁺²]), temperature of 80°C, contact time of 4 h. In these conditions, a percentage of extracted palladium of 95% was obtained.

Another study was developed by Li, Ding, Jin, Yu, Hu, Huang, International Journal of Hydrogen Energy, 26-09-2014. The study relates to an extensive application of Pd/ceramic membranes for hydrogen separation; the process for recycling the palladium in Pd/Al₂O₃ membranes was optimized, and promising results were achieved by treatment with 2 mol/L HCl and 1 mol/L H₂O₂. The recycled palladium can be utilized in a new plating bath to prepare new membranes through further rounds of electroless plating. The Al₂O₃ substrate remaining after palladium recycling can also be reused as the substrate material for preparation of new palladium membranes.

Also in the microfluidic field, roads for extraction, using solvent, of palladium and other precious metals from a hydrochloric leaching solution are being explored. The research conducted by Chun-Yang Yin, et *al.,* 2012, has defined a leaching solution containing 15wt% of HCl and 0.33wt% of AlCl₃ in deionized water, at 90°C for 90 min, adding a strong oxidizing agent. The extraction obtained in this experimentation for palladium was 99%.

Summarized in Table 1 below are the data resulting from search carried out in the literature, for leaching of palladium.

**Table 1 - State of the art of Pd leaching**

| **Paper** | **Substrate** | **Reagents** | **Concentration** | **T (°C)** | **t (h)** | **Rec.Pd %** |
|---|---|---|---|---|---|---|
| 1 | PCBs | 1^{st} stage: thiourea-Fe⁺³-H₂SO₄ | 20g/L-6g/L-10g/L | 25 | 3 | 2.13 |
| | | 2^{nd} stage: NaClO-HCl-H₂O₂ | 10vol%-5M-1vol% | 63 | 3 | 97.87 |
| 2 | Automotive catalysts | HCl-H₂O₂ | 11.6mol/L-1vol% | 65 | 3 | 100 |
| | | NaClO-HCl-H₂O₂ | 3vol%-5kmol/m³-1vol% | 65 | 3 | 98.7 |
| | | NaClO-HCl | 3vol%-5kmol/m³ | 65 | 3 | 96.6 |
| 3 | Automotive catalysts | HCl-AlCl₃-ag.ox | 15%w/w-0.33%w/w- ox. ag. | 90 | 1.5 | 99 |
| 4 | Catalytic converters | HCl-CuCl·2H₂O | 6M-0.3M [Cu⁺²] | 80 | 4 | 95 |
| 5 | Catalytic converters | HCl-HNO₃-H₂SO₄-NH₄F | 12M-15M-18M | 90 | 6 | >95 (PGM) |
| | | HCl-H₂O₂-H₂SO₄-NH₄F | 12M-110vol-18M | 90 | 6 | >95 (PGM) |

| | | | | | | |
|---|---|---|---|---|---|---|
| 1) Process development for recovery of copper and precious metals from waste printed circuit boards with emphasis on palladium and gold leaching and precipitation. Behnamfard, 2013. 2) Leaching of Pt, Pd and Rh from automotive catalyst residue in various chloride based Solutions. Sri Harjanto, 2006. 3) Microfluidic solvent extraction of platinum and palladium from a chloride leach solution using Alamine 336. Chun-Yang Yin, 2012. 4) Oxidative leaching process with cupric ion in hydrochloric acid media for recovery of Pd and Rh from spent catalytic converters. C.A. Nogueira, 2014. 5) Recovery by hydrometallurgical extraction of the platinum-group metals from car catalytic converters. D. Jimenez de Aberasturi, 2011. | | | | | | |

### State of the art of Ag leaching

The classic process for dissolution of silver via leaching envisages the use of cyanide as reagent. On account of the environmental impact of cyanidation, together with the increase in price of silver, there has been an increasing interest in alternative processes that are less dangerous and pollutant. The alternative reagents that are most sought for this purpose, as emerges from the literature, are currently thiourea, CH₄N₂S, and thiosulphate, S₂O₃⁻².

In particular, the system constituted by thiosulphate-copper-ammonia is considered by various sources a very promising solution. The mechanism of extraction of silver by thiosulphate may be oxidative or substitutional, according to the form of silver to be recovered. The oxidative mechanism requires the presence of ammonia, whereas the substitutional mechanism can proceed in the absence of this compound. It has been shown that oxidation of the pure-silver powders with a solution of thiosulphate and copper requires addition of ammonia. Instead, extraction, with thiosulphate, of silver in its oxidized form of silver sulphide or silver oxide reaches comparable yields without the use of ammonia in solution.

In the dissolution of pure silver via a system formed by thiosulphate-copper-ammonia, the cupric ions, Cu(II), oxidize the precious materials, whereas the thiosulphate forms complexes with them. Also ammonia is added to stabilize the cupric ions in the alkaline solution, preventing their precipitation as copper hydroxide. Just a few oxidizing agents, such as cupric ions, are suitable for working in ammonia solution.

The chemistry of this alternative leaching is very complicated on account of the onset of various chemical and electrochemical reactions during the process. Moreover, in addition to the silver oxidation reactions, there occurs an oxidative degradation of thiosulphate, which causes formation of tetrathionate (S₄O₆⁻²) and other sulphur compounds, and formation of various complexes of copper and silver with ammonia and thiosulphate.

The kinetics of leaching of silver is generally favoured by an increase in concentration of thiosulphate. Moreover, the concentrated solution of silver can be electrodeposited continuously, preventing redeposition of silver on the mineral or on the solid sample used.

The advantages in use of thiosulphate in leaching of silver encounter a limit in the high consumption of cupric ions and of thiosulphate, which renders the process still economically non-competitive as compared to the one that uses cyanide as extracting agent. For this reason it is not yet widespread on a commercial scale.

Consequently, the research has been focused in the increase of the oxidizing capacity of this leaching system with the purpose of preventing loss by oxidation of thiosulphate. Some studies have shown that EDTA (ethylene diamino tetra acetic acid) is a good complexing agent for increasing the kinetics of extraction of heavy metals such as lead, copper, zinc, and cadmium. In fact, EDTA decreases the oxidation of thiosulphate through formation of EDTA complexes with the Cu(II) ions (otherwise Cu(S₂O₃)₃ would form). In this way, the oxidizing potential of the leaching solution decreases.

It has been found from sources present in the literature that small amounts of EDTA accelerate leaching, rather than higher amounts, on account of an increase in the oxidizing potential of the leaching solution. Moreover, the kinetics of dissolution has been found to be reduced at low concentrations of Cu(II) ions, on account of the reduction in the oxidizing capacity of the solution itself.

Provided hereinafter are the reactions involved in the process of dissolution of silver in the thiosulphate-copper-ammonia system.

In the initial stages of the leaching process, the dissolution of metallic silver occurs simultaneously with the reduction of the cupric ions, Cu(II), to cuprous ions, Cu(I). We have:

Ag+3S₂O₃⁻²→Ag(S₂O₃)₃⁻⁵+e⁻

Cu(NH₃)₄⁺²+3S₂O₃⁻²+e⁻→Cu(S₂O₃)₃⁻⁵+4NH₃

There, however, occur also other reactions such as the reaction of oxidative decomposition of thiosulphate, involved in the formation of additional sulphur compounds, such as tetrathionate, and the reaction of the copper-sulphide species such as CuS and Cu₂ S:

Cu⁺²+S₂O₃⁻²+H₂O→CuS+SO₄⁻²+2H+

2Cu⁺+S₂O₃⁻²+H₂O→Cu₂S+SO₄⁻²+2H⁺

Once the copper-sulphide species are formed, the silver contained in the thiosulphate complex (Ag(S₂O₃)₃⁻⁵) could precipitate as silver sulphide:

Cu₂S+2Ag(S₂O₃)₃⁻⁵→Ag₂S+2Cu(S₂O₃)₃⁻⁵

As soon as silver sulphide is formed, it is possible to dissolve it again with consequent formation of a thiosulphate silver complex in solution:

2Cu⁺+Ag₂S→2Ag⁺+Cu₂S+6S₂0₃⁻²→2Ag(S₂O₃)₃⁻⁵

In the research carried out by D.M. Puente-Siller, *et al.,* 2012, leaching of metallic silver by the thiosulphate-Cu(II) system in the presence of ammonia was studied. The extraction conditions, defined as optimal, are the following: (NH₄)₂S₂O₃-CuSO₄-(NH₄)₂SO₄-EDTA (0.1M-0.05M-0.6M-1.25·10⁻⁴M), temperature of 25°C, and contact time of 20 min. In these conditions, a metal-extraction percentage of approximately 100% was achieved.

In the investigation conducted by P. Chieng, 2006, extraction yields of approximately 60% from minerals containing silver were achieved, using thiosulphate (0.15M) and copper sulphate (0.076M) with a leaching time of 2 h. The low recovery of silver, reported in this work, could be put down to, amongst other factors, an absence of ammonia among the reagents, which, instead, as has been said, actively participates in the extraction process.

Other studies have been conducted using as substrate silver sulphide. In this connection, J. L. Deutsch, *et al., 2013,* conducted a study on leaching of a rotary disk made of Ag₂S, reporting the following characteristics of the leaching medium: (NH₄)₂S₂O₃-(NH₄)₂SO₄-CuSO₄ (0.125M-total ammonia 0.35M-10mM) at 35°C for 24 h.

Reference parameters, in the search for the optimal process conditions for extraction of silver via leaching can be sought in studies conducted on leaching of gold, a metal that has a behaviour in solution that is very similar to that of silver and for which processes alternative to cyanidation are under study.

The study by Vinh Hung Ha, *et al.,* 2009, in particular, was conducted on leaching of gold from PCBs in a thiosulphate-copper-ammonia solution. The most suitable conditions for this dissolution were defined as (NH₄)₂S₂O₃-CuSO₄-(NH₄)⁺ (0.12M-20mM-0.2M) for 2 h at 25°C, reporting a percentage of extracted gold of 98%.

As has been said, to overcome the problems caused by use of cyanide for leaching of silver, use of thiosulphate was evaluated, which is a non-toxic and low-cost reagent. Even though with this reagent very high degrees of recovery of the metal are obtained, it is necessary to use a high amount thereof, it proving, as a whole, an economically burdensome process.

The use of thiourea for the leaching of gold has been extensively taken into consideration owing to the fast rate of dissolution of silver in this solvent, its low price and, obviously, its lower environmental impact as compared to cyanide. Given that thiourea is a compound that is unstable and easily decomposable in alkaline solution, the reaction should take place in acid environment. For this purpose, many researchers suggest the addition of sulphuric acid in the reaction mixture. Moreover Fe⁺³ ions are used as oxidizing agents.

The complex of reactions that show the extraction of silver in an acid thiourea solution, is the following:

Ag+3CS(NH₂)₂+Fe⁺³↔Ag[CS(NH₂)₂]₃⁺+Fe⁺²

Thiourea is easily oxidizable by the ferric ion in acid solution; formamidine disulphide is hence produced:

2CS(NH₂)₂+2Fe⁺³↔(SCN₂H₃)₂+2Fe⁺²+2H⁺

Formamidine disulphide is not stable in acid solution and irreversibly decomposes, to produce elementary sulphur and cyanamide:

(SCN₂H₃)₂ ↔ CS(NH₂)₂+NH₂CN+S

Thiourea is also lost on account of formation of a stable complex of ferric sulphate:

Fe⁺³+SO₄⁻²+CS(NH₂)₂↔[FeSO₄·CS(NH₂)₂]⁺

WPCBs (Waste Printed-Circuit Boards) used as substrate for recovery of palladium are also widely used for extracting therefrom other metals such as gold and silver.

The research conducted by A. Behnamfard *et al.,* 2013, on extraction from PCBs, has led to identification of an optimized leaching solution for extraction of silver characterized by the following reagents and process variables: thiourea-Fe⁺³-H₂SO₄ (20g/l-6g/l-10g/l) in deionized water with acid pH, temperature of 25°C, contact time of 3 h, silver recovery of 71%. The samples used were ground and shredded, after prior separation of the aluminium-based and electronic components.

The study on recovery of silver from PCBs conducted by Li Jing-Ying, *et al.,* 2011, defined the following composition of the leaching solution: thiourea-Fe⁺³-H₂SO₄, 24g/L-0.6%-0.5M. The temperature was fixed at 25°C, and the leaching time at 2 h. In these conditions, an extraction of silver of 50% was achieved. Also in this case the samples were ground and deprived of the electronic components.

As already mentioned, some first-approximation parameters, in the search for the optimal process conditions for extraction of silver may be sought in studies conducted on leaching of gold via a thiourea-based leaching solution. The research carried out by I. Birloaga, *et al.,* 2012, regards the process of leaching both of WPCBs (with content of metals of approximately 30%) to recover the gold contained therein and of the pins manually removed from computer CPUs. The leaching solution was prepared with thiourea-Fe⁺³-H₂SO₄, 20g/l-6g/l-10g/l for 3.5 h at 25°C. The yields in gold leached were, respectively, for the two substrates, 82% and 69%.

The increase in the cost of silver has stimulated search for substrates from which to recover this metal. In the study by A. Khaleghi, *et al.* it is envisaged to recover silver from an anode slime containing approximately 5.4% of Ag. The solution used for this purpose was constituted by sulphuric acid and nitric acid at a temperature of 90°C for 3 h, with a recovery of approximately 96% of the silver initially present in the sample.

A more traditional solvent for leaching of silver is nitric acid. There are various reports in the literature where a leaching medium was used with a base constituted by this acid for recovery of silver from substrates of various nature. The reaction that shows the extraction of silver by nitric acid is the following:

3Ag⁰+4HNO₃→3AgNO₃+ NO_{(g)}+2H₂O

Summarized in Table 2 below are the data resulting from search carried out in the literature, for leaching of silver:

**Table 2 - State of the art of Ag leaching**

| **Paper** | **Substrate** | **Reagents** | **Concentration** | **T (°C)** | **t (h)** | **Rec. Ag %** |
|---|---|---|---|---|---|---|
| 1 | PCBs | 1^{st} stage: H₂SO₄-H₂O₂ | 2M-20vol%(35%) | 25 | 3 | 0.86 |
| | | 2^{nd} stage: H₂SO₄-H₂O₂ | 2M-20vol%(35%) | 25 | 3 | 11.37 |
| | | 3^{rd} stage: thiourea-Fe⁺³-H₂SO₄ | 20g/L-6g/L-10g/L | 25 | 3 | 71.36 |
| 2 | Mineral | Thiosulphate-CuSO₄ | 0.15M-0.076M | - | 2 | 60 |
| 3 | Anode slime | HNO₃ | 4M | 90 | 3 | 96.25 |
| 4 | PCBs | Thiourea-Fe⁺³-H₂SO₄ | 24g/L-0.6%-0.5M | 25 | 2 | 50 |
| 5 | Ag₂S | (NH₄)₂S₂O₃-(NH₄)₂SO₄-CuSO₄ | 0.125M-tot.amm.0.35M-10mM | 35 | 24 | Ag |
| 6 | Silver | (NH₄)₂S₂O₃-CuSO₄-(NH₄)₂SO₄-EDTA | 0.1M-0.05M-0.6M-1.25·10-4M | 25 | | ≈100 |
| 7 | PCBs | (NH₄)₂S₂O₃-CuSO₄-(NH₄)⁺ | 0.12M-20mM-0.2M | 25 | 2 | 98 Au |
| 8 | Pins 30wt% Au | Thiourea-Fe⁺³-H₂SO₄ | 20g/L-6g/L-10g/L | 25 | 3.5 | 82.1 Au |
| | PCBs | Thiourea-Fe⁺³-H₂SO₄ | 20g/L-6g/L-10g/L | 25 | 3.5 | 69 Au |
| 9 | PDPs | HNO₃ | 5.5M | 60 | 1 | 90 |
| 10 | Ag₂S | HNO₃ | 284g/L | 150 | 1 | 96.1 |
| 11 | Mineral | HNO₃ | 0.65M | 130 | 1.5 | 100 |
| 12 | STVBs | HNO₃ | 5M | 70 | 2 | 68 |

| | | | | | | |
|---|---|---|---|---|---|---|
| 1) Process development for recovery of copper and precious metals from waste printed circuit boards with emphasis on palladium and gold leaching and precipitation. Behnamfard, 2013. 2) Recovery of silver from lead/zinc flotation tailings by thiosulfate leaching. Chieng, Pau, 2006. 3) Ag recovery from copper anode slime by acid leaching at atmospheric pressure to synthesize silver nanoparticles. Atefeh Khaleghi, 2013. 4) Thiourea leaching gold and silver from the printed circuit boards of waste mobile phones. Li Jing-ying, 2011. 5) Silver sulfide leaching with thiosulfate in the presence of additives: Copper-Ammonia. Deutsch, 2013. 6) A kinetic-thermodynamic study of silver leaching in thiosulfate-copper-ammonia-EDTA solutions. Puente-Siller, 2012. 7) Thiosulphate leaching of gold from waste mobile phones. Vinh Hung Ha, 2009. 8) Study on the influence of various factors in the hydrometallurgical processing of waste printed circuit boards for copper and gold recovery. Birloaga, 2012. 9) Nitric acid leaching of base metals from waste PDP (plasma display panel) electrode scrap and recovery of ruthenium content from leached residues. Jae Woo Ahn, 2010. 10)Nitric acid leaching of silver sulphide precipitates. Holloway, 2003 11) Pressure leaching of a lead-zinc-silver concentrate with nitric acid at moderate temperatures between 130 and 170°C. Zárate-Gutiérrez, 2009. 12)Treatment of manufacturing scrap TV boards (STVB) by nitric acid leaching. Ahmet Deniz Bas, 2013. | | | | | | |

### Operation of the process

Unlike what is so far known, the preset task is to define a process in which a step of leaching of the solid membrane samples for recovery of palladium and silver without damaging the metal substrate of the membrane is followed by a treatment of the leaching liquors to obtain a marketable fertilizer.

The scope of the invention is defined in the appended claims.

The description of the invention will be better understood with reference to the attached drawings, which illustrate merely by way of non-limiting example a preferred embodiment thereof. In the drawings:
Figure 1 is a block diagram of the process;
Figure 2 shows the thermostatted magnetically stirred leaching reactor;
Figure 3 shows the diagram of the leaching-liquor (LL) treatment;
Figure 4 shows the leaching block;
Figure 5 shows the sample L1 after treatment;
Figure 6 shows the sample L2 after treatment;
Figure 7 shows the sample L2 analysed under the scanning electron microscope (SEM);
Figure 8 shows the solid residue L2 analysed under the SEM;
Figure 9 shows the solid residue L2 analysed under the SEM;
Figure 10 shows the sample L3 after treatment;
Figure 11 shows the sample L5 after treatment;
Figure 12 shows a membrane sample following upon leaching with 2M HNO₃ solution (L6);
Figure 14 shows the composition of the more superficial section of the sample L6;
Figure 15 shows the composition of the less superficial section of the sample L6;
Figure 16 shows the surface of the membrane sample following upon leaching L7;
Figure 17 shows the composition of the sample L7 - Map 1;
Figure 18 shows the SEM image of the sample L7 - Map 1;
Figure 19 shows the composition of the sample L7 - Map 2;
Figure 20 is the SEM image of the sample L7 - Map 2;
Figure 21 shows the composition of the solid residue of the sample L7 ;
Figure 22 shows the SEM image of the solid residue of the sample L7;
Figure 23 shows the surface of the membrane sample following upon leaching 8;
Figure 24 shows the composition of the sample L8 following upon SEM investigation;
Figure 25 shows the SEM image of the sample L8;
Figure 26 shows the composition of the solid residue 1 of the sample L8;
Figure 27 shows the SEM image of the solid residue 1 of the sample L8;

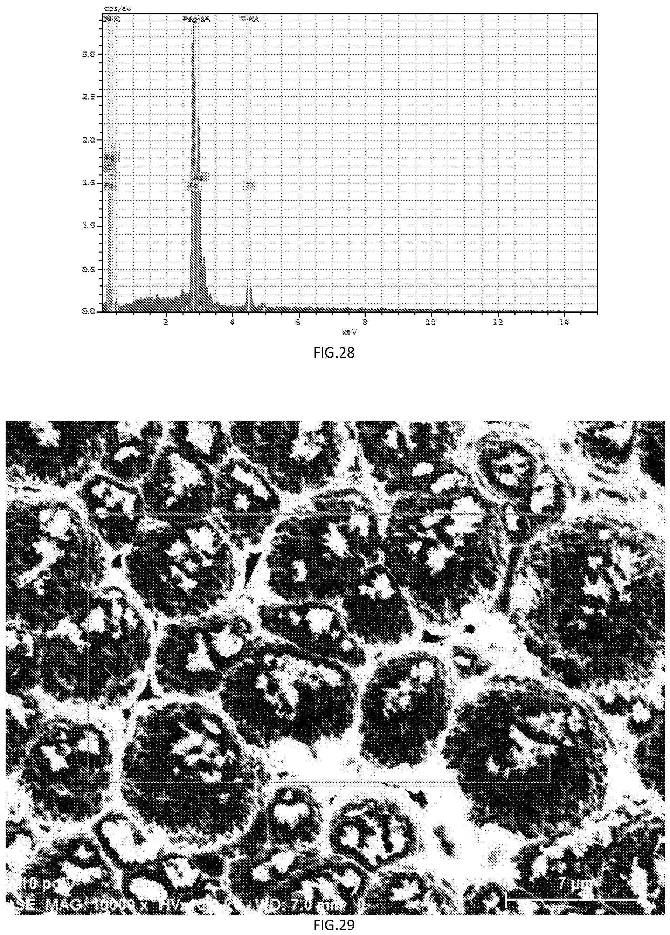

Figure 28 shows the composition of the solid residue 2 of the sample L8;
Figure 29 shows the SEM image of the solid residue of the sample L8;
Figure 30 shows the effect of the pH on the concentration of Ag, Fe, and Pd in the filtrate prior to evaporation;
Figure 31 shows the kinetics of adsorption of Pd from the leaching liquor with carbon; and
Figure 32 shows the precipitates obtained after treatment with carbon, CaCO₃, and Ca(OH)₂.

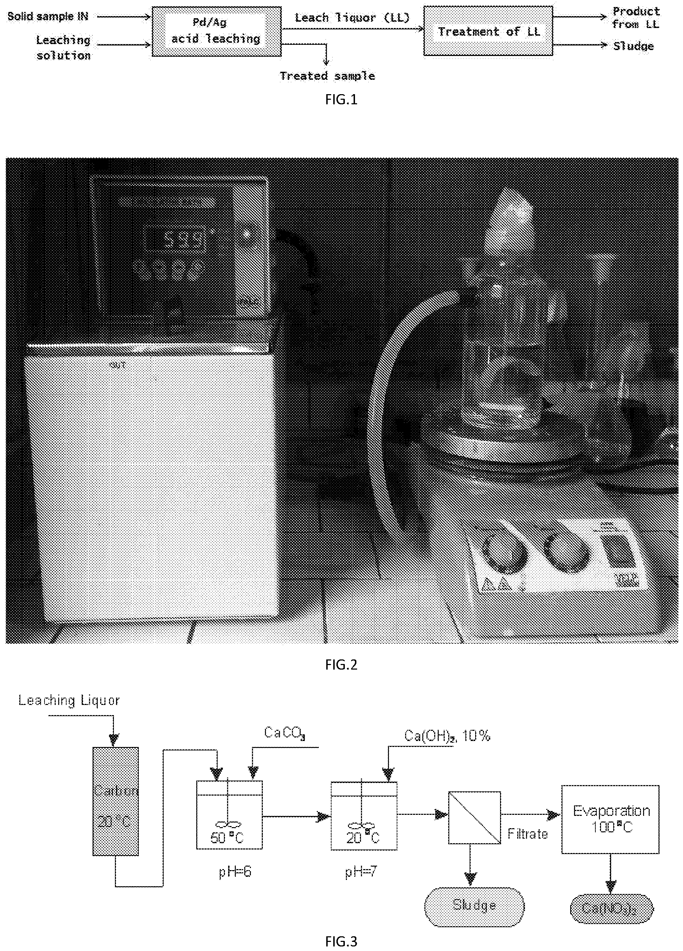

With reference to Figure 1, a block flow diagram (BFD) of the process forming the subject of the invention is proposed, substantially consisting in:
a first leaching stage LA where the solid sample obtained from the membrane module is leached in an acid solvent to enable maximum dissolution of silver and palladium and minimal dissolution of iron, which is an index of deterioration of the metal substrate, so as to obtain a treated membrane sample in which damage to the metal substrate is negligible; and
a second stage where the leaching liquor is treated to obtain calcium nitrate Ca(NO₃)₂, after removal both of Pd and of the Ag and Fe salts present.

The experimental procedure that has enabled identification of the most suitable conditions for recovery of the substrate of the metal membranes is now described.

This procedure consisted in the following stages:
1) characterization of the samples: dissolution of the samples with a microwave digestor (Milestone-microwave laboratory system-ETHOS 900-microwave labstation) followed by analysis of the solution via atomic-absorption spectroscopy (AAS) (AAS-ANALYTIKJENA-contrAA 300);
2) Pd/Ag leaching: leaching tests using with different solutions;
3) AAS analysis of the leaching medium after the leaching test;
4) analysis via SEM (Zeiss Auriga at the Research Center of Nanotechnologies for Engineering La Sapienza University of Rome CNIS) of the solid residues of the samples, after the leaching test; and
5) treatment of the LL for removal of Fe, Ag, and Pd nitrates to obtain the (marketable) fertilizer C_{A}(NO₃)₂.

In order to quantify the content of metals of interest in the samples, the tests were conducted in a mineralizer by testing various types of digestion solution with the following conditions:
- Temperature: 220°C;
- Power: 1000 W;
- Time for each cycle in the mineralizer: 30 min.

Digestion of the sample with aqua regia and hydrogen peroxide produced complete dissolution of the sample (three tests in series were conducted on the solid residue of the original sample), thus obtaining the following results:
- 3.93 mgPd/g sample;
- 0.67 mgAg/g sample.

### Leaching test

The leaching test was conducted on a sample in which the surface of the steel substrate was shielded with epoxy resin to enable the leaching agent to attack exclusively the Pd/Ag membrane, affected by dissolution. A magnetically stirred jacketed batch reactor was used. The reactor was connected to a thermostat for regulation of the temperature, using distilled water as service fluid. Stirring was guaranteed via a magnetic stirrer of 2 cm in length.

Represented in Figure 2 is the leaching reactor used during the leaching test, provided with the magnetic stirrer and connected to the thermostatic bath.

The sample was fixed to an L-shaped support by means of a Teflon wire. The reactor was moreover plugged to prevent any possible evaporation and leakage of solvent.

The laboratory experimentation was conducted for identification of a leaching medium that would enable maximum dissolution of palladium and silver (quantified through the measurement of the concentration of the two metals in the solution at the end of the test and validated by SEM analysis) and that, above all, would not damage the metal substrate (an aspect quantified by minimization of dissolved iron).

The preliminary morphological analysis of the samples of membrane module revealed the presence of discontinuities in the selective layer of palladium and silver, which exposed in some points the titanium intermetal barrier and the metal substrate to the external environment. This fact revealed that inevitably areas of contact might be created between the steel and the leaching medium.

The conditions of the leaching medium that enabled the pre-set target to be achieved were the following:
- aqueous solution: 3M of HNO₃ + 1vol% of H₂O₂ (30vol%);
- contact time between the solid and the leaching medium: 3 h 30 min;
- temperature: 60°C;
- stirring rate of the magnet: 300 rpm.

The weight of the sample subjected to said test was 9.4 g, and the volume of solution used was 160 ml. In these conditions the yields of dissolution of palladium and silver were, respectively, 42.6% and 72.5%, whereas the iron and titanium in the leaching medium were, respectively, approximately 0.7% and 89.8% of the total amount initially present.

### Treatment of the leaching liquor (LL)

The final target is to obtain calcium nitrate Ca(NO₃)₂, which can be used both as fertilizer, it constituting, in fact, a resource of two nutrients, calcium and nitrogen, and in water pretreatments to prevent emission of bad odours.

Both calcium carbonate and soda can be used for neutralizing nitric acid and to obtain the fertilizer Ca(NO₃)₂ as shown by the following reactions:

CaCO₃ + 2HNO₃ → Ca(NO₃)₂ + CO₂ + H₂O

Ca(OH)₂ + 2HNO₃ → Ca(NO₃)₂ + H₂O

From the various systems analysed, the best one was found to be the one shown in Figure 3.

This process envisages the steps listed below.
1. Treatment with carbon at 20°C: this treatment is necessary for removal of the Pd present in the LL in so far as it is not removable with the treatments with CaCO₃ and Ca(OH)₂. In a batch reactor the necessary amount of carbon and the LL to be treated are introduced and kept under stirring by means of a magnetic stirrer at the constant temperature of 20°C.
2. Neutralization with CaCO₃ at 50°C: this treatment is necessary for removal of Fe and Ag nitrates by precipitation, and the reactions that take place, at different pH values, in the LL are given in the Table 3 below.

**Table 3 - Neutralization of the LL with CaCO₃ as reagent**

| |
|---|
| LL + Ca(CO₃)₂ |
| pH=0.1 -6 |
| Fe(NO₃)₃ + CaCO₃ → Ca(NO₃)₂ + CO₂ ↑ + FeO |
| 3 FeO + 10 HNO₃ → 3 Fe(NO₃)₃ + 5 H₂O + NO |
| |
| AgNO₃ + CaCO₃ → Ca(NO₃)₂ + Ag₂CO₃↓ |
| Ag₂CO₃ + 2 HNO₃ = 2 AgNO₃ + CO₂ ↑ + H₂O |
| |
| Pb(NO₃)₄ + 2CaCO₃ ≠ |
| |
| 2HNO₃+ CaCO₃ → Ca(NO₃)₂ + CO₂ ↑ + H₂O |

3. Adjustment of the pH with Ca(OH)₂ at 10%: this is necessary to bring the pH values back to values close to 7 to enable further precipitation of the Fe-based and Ag-based compounds and to neutralize the solution (a final compound having an acid pH could not be used). Appearing in Table 4 below are the reactions that occur in the LL.

**Table 4 - Reactions that occur in the LL**

| |
|---|
| (LL + Ca(CO₃)₂) + Ca(OH)₂ |
| pH=6 - 7 |
| 2Fe(NO₃)₃ + 3Ca(OH)₂ = 3CaCO₃ + 2**Fe(OH)₃** ↓ |
| |
| Ag₂CO₃ + Ca(OH)₂ = GaGO₃ + 2**AgOH** ↓ |

4. Filtering: with this step there is obtained separation of the sludge, chiefly made up of the metal precipitates, from the liquid.
5. Evaporation at 100°C: this is the last step in which the final desired compound Ca(NO₃)₂ is obtained.

### Matter balances - Optimal solution

Appearing in Table 5 below are the matter balances regarding the test that has made it possible to obtain the best yield of dissolution of palladium and silver, minimizing dissolution of iron (an index of deterioration of the metal substrate, recovery of which represents the main target of the process). The optimal leaching conditions, already discussed in the section regarding the leaching tests, will be described in further detail in the next section concerning the optimal solution identified.

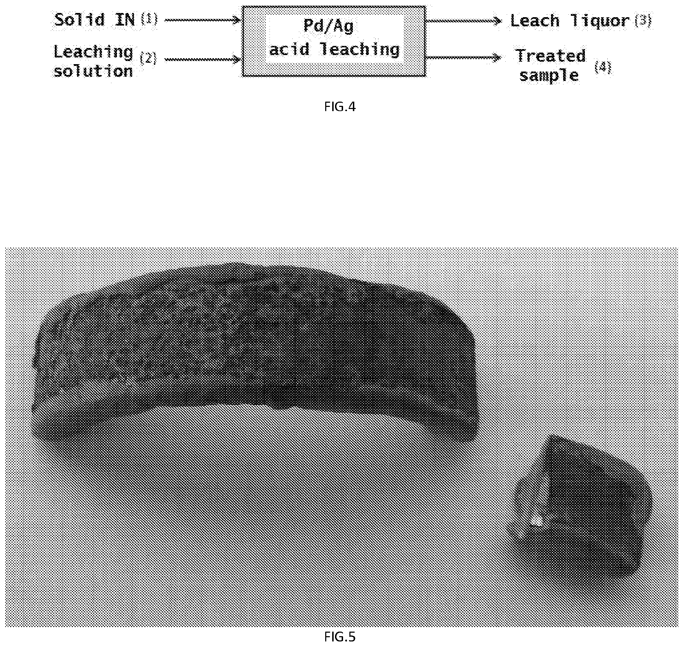

Moreover described is the leaching block (Figure 4) with the currents at input and output from said stage, to which reference will be made in Table 5 below.

**Table 5 - Matter balances**

| **Current nbr.** | **Current name** | **Q.ty (g)** | **Composition (g)** | | **Notes** | |
|---|---|---|---|---|---|---|
| (1) | | | Pd (g) | 0.037 | 3.93 mgPd/g sample | |
| | Solid In | 9.4 | Ag (g) | 0.006 | 0.67 mgAg/g sample | |
| | | | Ti (g) | 0.007 | 0.75 mgTi/g sample | |
| | | | Fe (g) | 6.157 | 653.9 mgFe/g sample | |
| (2) | | | HNO₃ * (g) | 46.2 | | |
| | Leaching solution | 173.42 | H₂O₂ ** (g) | 1.824 | | |
| | | | dist. H₂O (g) | 125.4 | | |
| (3) | | | Pd (mg/L) | 93.59 | Pd dissolved | 42.6 % |
| | Leaching Liquor (LL) | 173.49 | Ag (mg/L) | 26.98 | Ag dissolved | 72.5 % |
| | | | Ti (mg/L) | 37.81 | Ti dissolved | 89.8% |
| | | | Fe (mg/L) | 261.7 | Fe dissolved | 0.7% |
| (4) | | | Pd (g) | 0.022 | | |
| | | | Ag (g) | 0.002 | | |
| | Treated sample | 9.35 | Ti (g) | 0.001 | | |
| | | | Fe (g) | 6.115 | | |

| | | | | | | |
|---|---|---|---|---|---|---|
| * 65wt% solution of HNO₃ ** 30vol% solution of H₂O₂ | | | | | | |

### Examples

The preliminary bibliographic search has made it possible to define the starting solutions for leaching of the metals of interest (palladium and silver) for the laboratory experimentation campaign:
- Dissolution of palladium: HCl+H₂O₂ in distilled H₂O ;
- Dissolution of silver: (NH₄)₂S₂O₃, CuSO₄, (NH₄)₂SO₄, NH₄OH, distilled H₂O; (NH₂)₂CS, Fe₂SO₄, H₂SO₄, distilled H₂O. 2

Table 6 below shows the conditions of some leaching tests that have been carried out.

**Table 6 - Leaching solutions tested**

| **Test** | **Reagents** | **Q.ty** | **Sample (g)** | **Volume (ml)** | **Temperature (°C)** | **Time (h)** |
|---|---|---|---|---|---|---|
| L1 | HCl (37wt%) | 37 ml | 8.98 | 150 | 60 | 3 |
| | H₂O₂ (30vol%) | 1.3 ml | | | | |
| L2 | HCl (37wt%) | 14.75 ml | 9.7403 | 150 | 60 | 3 |
| | H₂O₂ (30vol%) | 1.5 ml | | | | |
| L3 | (NH₄)₂S₂O₃ | 6.6 g | 8.0699 | 150 | 25 | 0.5 |
| | (99%) | 14.9 g | | | | |
| | (NH₄)₂SO₄ | 2.4 g | | | | |
| | (99%) | 5 ml | | | | |
| | anhydrous | | | | | |
| | CuSO₄ | | | | | |
| | NH₄OH (30%) | | | | | |
| L4 | Thiourea (99%) | 3.6 g | 8.3224 | 150 | 25 | 0.5 |
| | Fe₂ | 0.93 g | | | | |
| | (SO₄)₃·5H₂O | 4.1 ml | | | | |
| | H₂SO₄ (96wt%) | | | | | |
| L5 | Thiourea (99%) | 3.6 g | 10.124 | 150 | 32.2 | 2 |
| | Fe₂ | 0.88 g | | | | |
| | (SO₄)₃·5H₂O | 4.2 ml | | | | |
| | H₂SO₄ (96wt%) | | | | | |

After the leaching test, all the liquid samples of the leaching medium, extracted at various intervals from start of the test, were analysed via AAS, and the residual solid samples were subjected to SEM analysis for qualitative evaluation of the elements present on the surface of the samples after leaching.

### Leaching with hydrochloric acid

During the leaching tests with hydrochloric acid, some samples of the leaching medium were extracted and were analysed via AAS, yielding the results appearing in Table 7 below.

**Table 7 - Leaching based upon hydrochloric acid**

| **L1 (HCl(37wt%)= 37 ml; H₂O₂ (30vol%)=1.3 ml)** | | |
|---|---|---|
| Time | Pd mg/l | Fe mg/l |
| 1 h | 1.5 | 437 |
| 2h | 2.2 | - |
| 3 h | 1.3 | 1816 |

| **L2 (HCl(37wt%)= 14.75 ml; H₂O₂ (30vol%)=1.5 ml)** | | |
|---|---|---|
| Time | Pd mg/l | Fe mg/l |
| 1 h | 1.2 | 464 |
| 2 h | 0 | 543 |
| 3 h | 0 | 565 |

The dissolution yields of tests L1 and L2 were <1%.

After the leaching tests, the membrane sample treated was analysed via SEM. The results for the leaching L1 are shown in Figure 5 and in Table 8.

**Table 8 - SEM analysis of the sample L1**

| **Element** | **unn. C (wt%)** | **Error (wt%)** |
|---|---|---|
| Oxygen | 33.83 | 4.46 |
| Carbon | 4.79 | 1.05 |
| Silicon | 5.22 | 0.27 |
| Aluminium | 1.36 | 0.11 |
| Iron | 30.36 | 1.68 |
| Potassium | 2.71 | 0.16 |
| Chromium | 2.22 | 0.20 |
| Sulphur | 0.92 | 0.08 |
| Chlorine | 0.38 | 0.06 |
| Magnesium | 0.69 | 0.08 |
| Sodium | 0.78 | 0.10 |
| Nickel | 6.20 | 1.21 |
| Calcium | 0.88 | 0.09 |
| Palladium | 0.10 | 0.04 |
| Total | 90.44 | |

This experiment was conducted with hydrochloric acid at high concentration. During testing, there was noted the presence of detachment of the metal coating in the leaching medium after a short time from start of test. This observation was confirmed by the results of SEM analysis, which revealed the almost complete absence of palladium and silver on the surface of the sample, and by the results of the AAS analysis, which revealed a very high concentration of iron in solution.

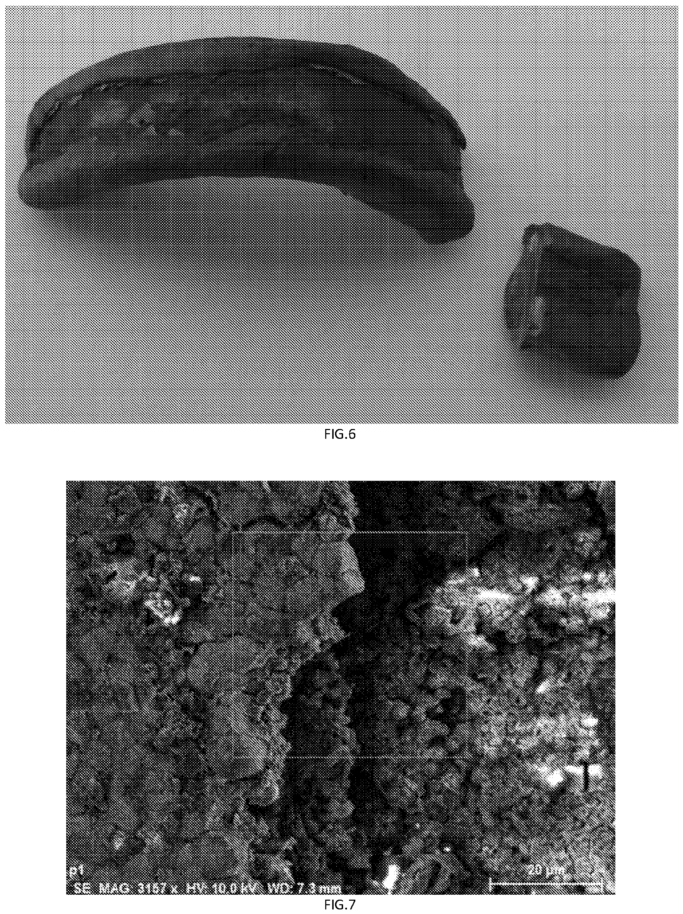

The test conducted with the sample treated in the test L2 led to the results appearing in Figure 6.7 and in Table 9.

**Table 9 - SEM analysis of sample L2**

| **Element** | **unn. C** | **Error (wt%)** |
|---|---|---|
| | **(wt%)** | |
| O | 29.19 | 3.77 |
| Fe | 26.31 | 1.41 |
| C | 5.57 | 1.10 |
| Cr | 9.06 | 0.47 |
| Cl | 4.97 | 0.22 |
| Si | 2.79 | 0.16 |
| Ni | 2.19 | 0.53 |
| Mo | 1.95 | 0.13 |
| Ca | 0.41 | 0.06 |
| Mg | 0.23 | 0.05 |
| Al | 0.10 | 0.04 |
| Total | 82.77 | |

This leaching was conducted with an aggressive solution of hydrochloric acid but with a smaller concentration of reagent as compared to the test L1. However, also in this case, there was found the presence of some detachment of the membrane coating that exposed the metal substrate thus allowing the leaching solution to attack preferentially the substrate rather than the solid residue of membrane and titanium in solution.

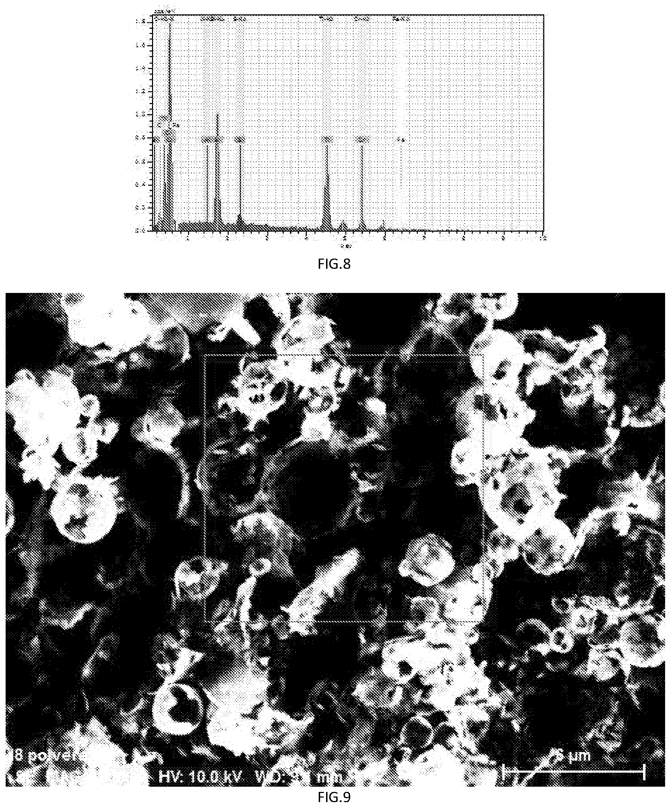

The solid fragments accumulated in the leaching medium were separated from the solution through filtering with vacuum filter. Next, they were dried in an oven and finally analysed with a scanning electron microscope to obtain the results appearing in Figures 8 and 9.

With the results obtained from leaching of palladium it was estimated that leaching with hydrochloric acid caused a detachment of the Pd/Ag coating and of the TiN layer from the surface of the sample. In particular, it was noted that the TiN layer had remained adherent on the membrane rather than on the metal substrate.

This exfoliation "exposed" the substrate, rendering it preferentially subject to attack of the chlorine-based leaching solution. This is highlighted by the low concentration of palladium in solution and by the high amount of iron dissolved.

This leaching medium was considered inappropriate: in fact, the main target of the process is to remove the damaged coating of palladium and silver, maintaining the substrate intact and adequate for subsequent re-deposition of the noble metals.

### Leaching with thiosulphate and thiourea

Table 10 below shows the AAS results of the testing conducted using thiourea and thiosulphate to enable dissolution of silver.

**Table 10 - Leaching based upon thiourea and thiosulphate solution**

| **L3 ((NH₄)₂S₂O₃ (99%)=6.6 g; (NH₄)₂SO₄ (99%)=14.9 g; anhydrous CuSO₄ = 2.4 g; NH₄OH(30%)=5 ml)** | | |
|---|---|---|
| Time | Ag mg/l | Fe mg/l |
| 10 min | 1.4 | 0 |
| 20 min | 0.7 | 0 |
| 30 min | 0.2 | 0.3 |

| **L4 (Thiourea(99%)=3.6 g ; Fe₂ (SO₄)₃.5H₂O=0.93 g ; H₂SO₄ (96wt%)=4.1 ml)** | | |
|---|---|---|
| Time | Ag mg/l | Fe mg/l |
| 10 min | 0.5 | 1920 |
| 20 min | 0.5 | 1991 |
| 30 min | 0.5 | 2056 |

| **L5 (Thiourea(99%)=3.6 g ; Fe₂ (SO₄) ₃·5H₂O=0.88 g ; H₂SO₄ (96wt%)=4.2 ml)** | | |
|---|---|---|
| Time | Ag mg/l | Fe mg/l |
| 1 h | 0 | - |
| 2 h | 0.3 | - |

The Ag dissolution yield in test L3 was less than 5%, whereas the Ag dissolution yield in tests L4 and L5 was less than 2%.

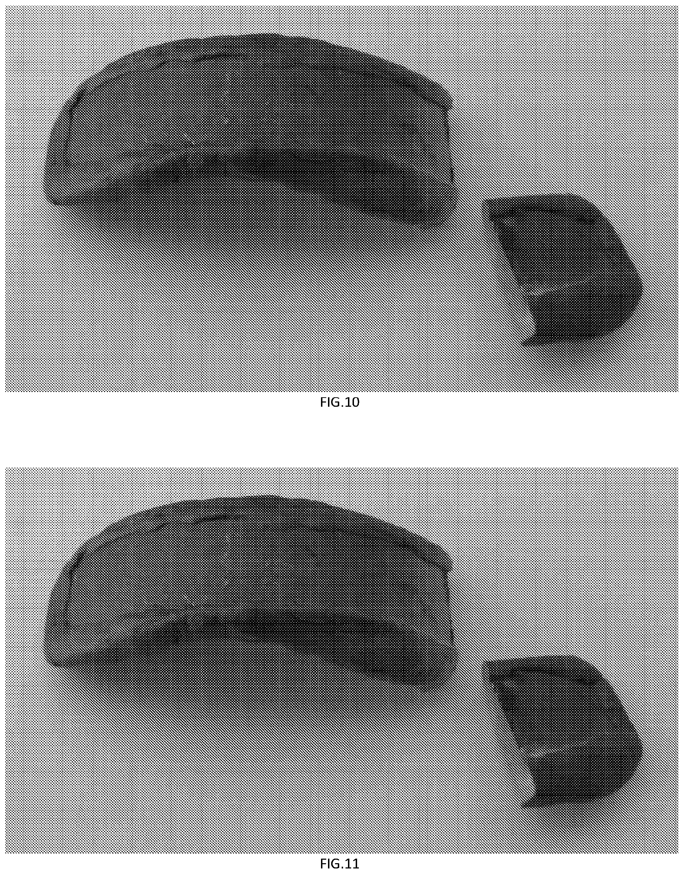

The results of leaching with thiosulphate (L3) are shown in Figure 10 and Table 11.

**Table 11 - SEM analysis of the sample L3**

| **Element** | **unn. C** | **Error** |
|---|---|---|
| | **(wt%)** | **(wt%)** |
| Oxygen | 27.33 | 3.64 |
| Carbon | 19.87 | 2.76 |
| Silicon | 6.69 | 0.32 |
| Palladium | 12.12 | 0.47 |
| Sulphur | 4.44 | 0.20 |
| Magnesium | 3.94 | 0.24 |
| Calcium | 1.56 | 0.12 |
| Aluminium | 0.49 | 0.06 |
| Silver | 2.49 | 0.14 |
| Copper | 4.03 | 0.76 |
| Iron | 0.27 | 0.10 |
| Total | 83.22 | |

The test L3 was conducted using a leaching medium based upon ammonium thiosulphate. Also for this sample, the analysis after the treatment revealed the permanence of Pd and Ag on the surface. This revealed an inadequacy of the leaching medium for dissolution of the metals of interest. In addition, there were found small areas of iron exposed distributed over the surface of the sample. This aspect can be attributed both to a phenomenon of localized dissolution that exposed some areas of the metal substrate and to the presence of surface discontinuities already existing in the sample prior to treatment.

Figure 11 and Table 12 show an example of SEM analysis of a sample attacked with a thiourea-based solution (L5).

**Table 12 - SEM analysis of the sample L5**

| **Element** | **unn. C** | **Error** |
|---|---|---|
| | **(wt%)** | **(wt%)** |
| Oxygen | 21.87 | 3.04 |
| Carbon | 17.38 | 2.45 |
| Silicon | 6.34 | 0.31 |
| Palladium | 14.18 | 0.54 |
| Sulphur | 3.97 | 0.19 |
| Magnesium | 3.08 | 0.20 |
| Calcium | 2.02 | 0.14 |
| Aluminium | 0.39 | 0.05 |
| Iron | 1.02 | 0.19 |
| Silver | 2.73 | 0.15 |
| Titanium | 0.42 | 0.07 |
| Total | 73.40 | |

This dissolution test was conducted with a thiourea-based solution in acid environment. As the results of the SEM analysis show, palladium and silver remained evenly distributed over the sample even after treatment. This consideration, supported by the results of the AAS analysis, showed that this leaching solution did not prove effective for the purpose pursued.

In the dissolution of silver with non-conventional reagents, such as thiosulphate and thiourea, SEM analysis confirmed the presence of the Pd/Ag membrane on the sample even after the leaching treatment. This qualitative analysis serves as a further confirmation of the fact that the leaching solutions so far tested dissolve a very small amount of silver.

The presence of precipitates in the dissolution tests could indicate a greater detachment of the coating with respect to what can be deduced from the results of the AAS analysis. However, this detached material remains solid without managing to dissolve any further in the leaching medium.

### Leaching with nitric acid

The tests conducted using nitric acid as leaching agent made it possible to obtain the best yields of dissolution of the metals of interest, palladium and silver, and to achieve the main target of the leaching process, namely minimization of dissolution of iron, an index of negligible damage to the metal substrate.

Appearing in Table 13 below are the results of some leaching tests conducted using nitric acid as leaching agent.

**Table 13 - Experimental tests with nitric acid**

| **Test** | **Reagents** | **Q.ty** | **Sample** | **Volume** | **Temperature** | **Time** |
|---|---|---|---|---|---|---|
| | | **(ml)** | **(g)** | **(ml)** | **(°C)** | **(h)** |
| L6 | HNO₃ (65wt%) | 20.8 | 6.35 | 150 | 60 | 3.5 |
| | H₂O₂ (30vol%) | 1.5 | | | | |
| L7 | HNO₃ (65wt%) | 33 | 9.42 | 160 | 60 | 3.5 |
| | H₂O₂ (30vol%) | 1.6 | | | | |
| L8 | HNO₃ (65wt%) | 41.5 | 5.70 | 150 | 60 | 2 |
| | H₂O₂ (30vol%) | 1.5 | | | | |

Table 14 below shows the AAS results of the experiments L6, L7, L8 (conducted, respectively, with 2M, 3M, and 4M solutions of HNO₃).

**Table 14 - AAS results for tests with nitric acid**

| **L6 (2M HNO₃)** | | | |
|---|---|---|---|
| Time | Pd mg/l | Ag mg/l | Fe mg/l |
| 30 min | 0.0752 | - | 83.89 |
| 1 h | 0.2312 | - | 133.1 |
| 2 h | 0.9562 | - | 204.5 |
| 3 h | 2.927 | 1.264 | 258.3 |

| **L7 (3M HNO₃)** | | | |
|---|---|---|---|
| Time | Pd mg/l | Ag mg/l | Fe mg/l |
| 30 min | 4.33 | 0 | 74.77 |
| 1 h | 17.66 | 4.178 | 139 |
| 2 h | 40.5 | 13.41 | 183.9 |
| 3 h | 79.9 | 22.91 | 240.1 |
| 3.5 h | 93.59 | 26.98 | 261.7 |

| **L8 (4M HNO₃)** | | | |
|---|---|---|---|
| Time | Pd mg/l | Ag mg/l | Fe mg/l |
| 30 min | 10.83 | 3.92 | 102 |
| 1 h | 32.02 | 10.96 | 151.3 |
| 2 h | 44.59 | 14.77 | 222.1 |

The dissolution yields at the end of the tests were:
- Leaching L6: palladium dissolution 1.9% and silver dissolution 4.7%;
- Leaching L7: palladium dissolution 42.6% and silver dissolution 72.5%;
- Leaching L8: palladium dissolution 31.4% and silver dissolution 61.5%.

### Leaching L6: 2M HNO₃

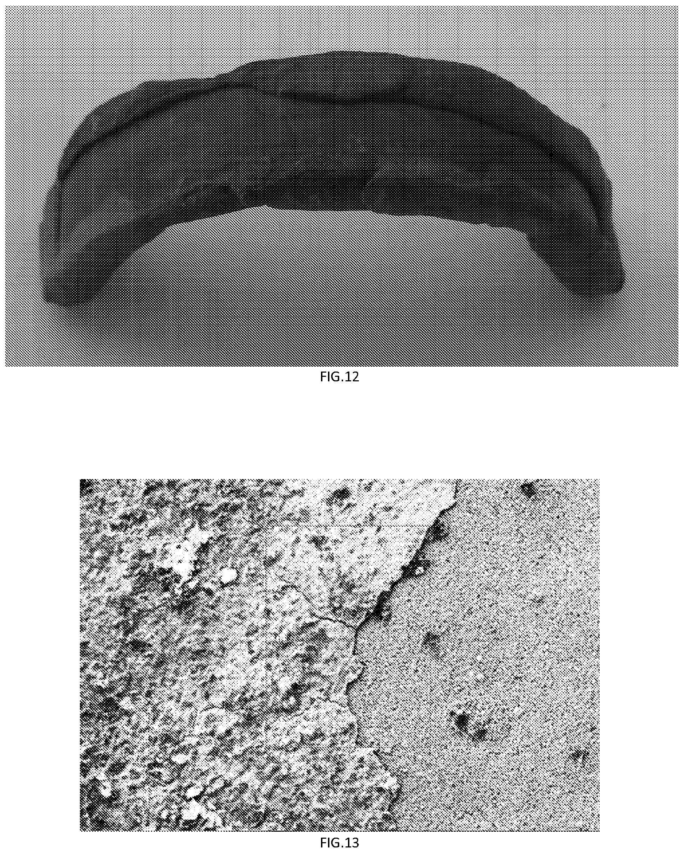

Figures 12 and 13 show, respectively, the surface of the sample following upon the leaching L6 and SEM analysis.

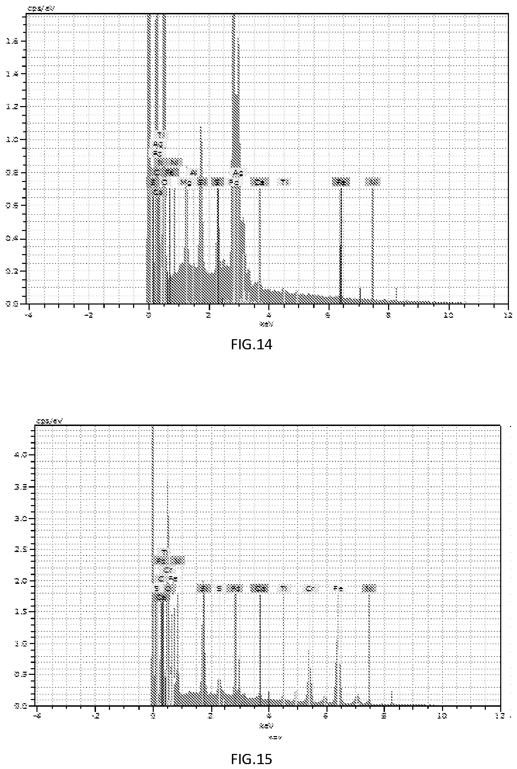

The SEM analysis of this sample revealed the presence of distinct areas (as may be noted from Figure 13). Given first of all in Figure 14 and in Table 15 below is the composition of the more superficial area.

**Table 15 - Composition of the more superficial section of the leaching sample L6**

| **Element** | **unn. C** | **Error** |
|---|---|---|
| | **(wt.%)** | **(wt.%)** |
| Oxygen | 26.08 | 6.54 |
| Carbon | 13.14 | 3.39 |
| Nitrogen | 1.85 | 0.85 |
| Palladium | 34.98 | 2.34 |
| Silicon | 3.10 | 0.32 |
| Magnesium | 1.68 | 0.24 |
| Sulphur | 1.81 | 0.19 |
| Calcium | 0.60 | 0.11 |
| Titanium | 0.38 | 0.10 |
| Aluminium | 0.03 | 0.06 |
| Nickel | 0.30 | 0.14 |
| Silver | 7.36 | 0.55 |
| Total | 92.44 | |

This analysis showed the rather homogeneous presence, on a part of the surface of the sample, of the Pd/Ag membrane. There was, however, found a thickness of the membrane smaller than the starting value, suggesting a partial dissolution of this layer in the leaching solution.

During this test, there was no evidence of detachment of surface coating constituted (as in the other analyses in which HNO₃ was used, which will shortly be described) by the Pd/Ag membrane and by the TiN layer. Also the AAS analysis indicated lower concentrations of the metals of interest in solution.

Appearing in Figure 15 and in Table 16 below are the results of the SEM analysis in the less superficial area of the sample analysed.

**Table 16 - Composition of the less superficial section of the leaching sample L6**

| **Element** | **unn. C** | **Error** |
|---|---|---|
| | **(wt.%)** | **(wt.%)** |
| Oxygen | 15.45 | 3.94 |
| Iron | 51.75 | 3.68 |
| Carbon | 6.49 | 2.11 |
| Chromium | 13.83 | 0.99 |
| Silicon | 6.10 | 0.56 |
| Nickel | 7.51 | 0.80 |
| Sulphur | 1.02 | 0.13 |
| Palladium | 2.46 | 0.23 |
| Titanium | 1.17 | 0.15 |
| Calcium | 0.68 | 0.11 |
| Total | 106.45 | |

The SEM analysis of this area showed the presence of the steel substrate with a small percentage of palladium, evidently not yet leached. There was found in this section also the presence of the intermetal titanium barrier. This may suggest that this element remains adherent to the steel substrate, probably by virtue of the less aggressive conditions with which this leaching test was carried out. This shows, in fact, a difference as compared to leaching with HNO₃ in more aggressive conditions (3-4M) described hereinafter, where there was noted detachment of the coating constituted both by the Pd-Ag layer and by the Ti layer (highlighting a better affinity of the intermetal barrier for the selective layer rather than for the metal substrate).

### Leaching L7: 3M HNO₃- Optimal solution

The laboratory experimentation was conducted for identification of a leaching medium that would enable maximum dissolution of palladium and silver (quantified through the measurement of the concentration of the two metals in the solution at the end of the test and validated by SEM analysis) and that, above all, would not damage the metal substrate (an aspect quantified by minimization of iron dissolved).

The preliminary morphological analysis of the samples of membrane module revealed the presence of discontinuities in the selective palladium and silver layer, which exposed in some points the titanium intermetal barrier and the metal substrate to the external environment. This fact revealed that inevitably there might be created areas of contact between the steel and the leaching medium.

The reagent mixture that best enabled the pre-set target to be achieved was the one constituted by a 3M aqueous solution of HNO₃, adding 1vol% of a 30vol% solution of H₂O₂.

The contact time between the solid and the leaching medium was 3 h 30 min at a temperature of 60°C and with a stirring rate of the magnet of 300 rpm.

The weight of the sample subjected to this test was 9.4 g, and the volume of solution used was 160 ml. In these conditions, the yields of dissolution of palladium and silver were, respectively, 42.6% and 72.5%, whereas the iron and titanium in the leaching medium were, respectively, approximately 0.7% and 89.8% of the total amount initially present.

Appearing in Table 17 below are the process conditions of the test that enabled minimization of iron in solution and maximization of palladium and silver dissolved.

**Table 17 - Optimal test**

| | **Reagent mixture** | | **Solution volume (ml)** | **Sample weight (g)** | **Temperature (°C)** | **Contact time (h)** | **Rate of stirrer (rpm)** |
|---|---|---|---|---|---|---|---|
| Optimal mix | Reagents | Q.ty (ml) | 160 | 9.4 | 60 | 3.5 | 300 |
| | HNO₃* | 33 | | | | | |
| | H₂O₂** | 1.6 | | | | | |
| | dist.H₂O | 125.4 | | | | | |

| | | | | | | | |
|---|---|---|---|---|---|---|---|
| * 65wt% HNO₃ solution ** 30vol% H₂O₂ solution | | | | | | | |

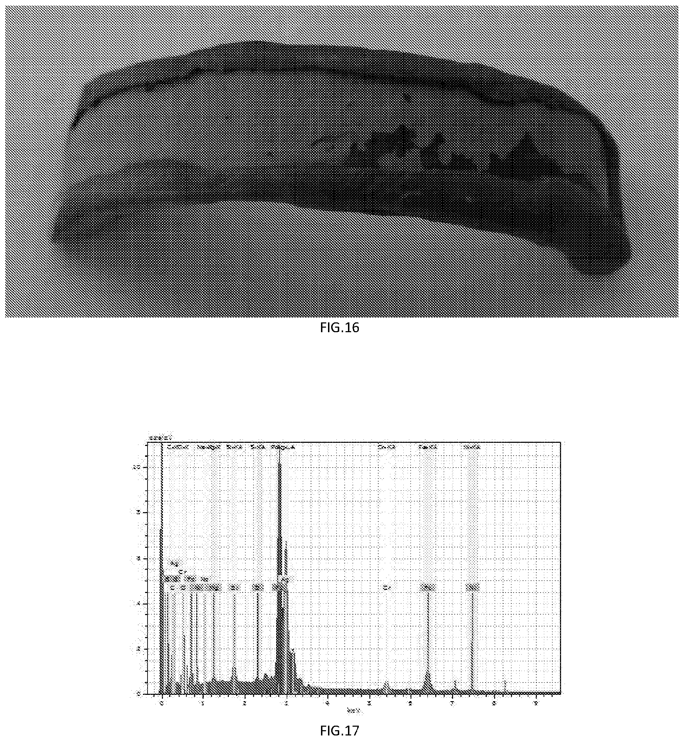

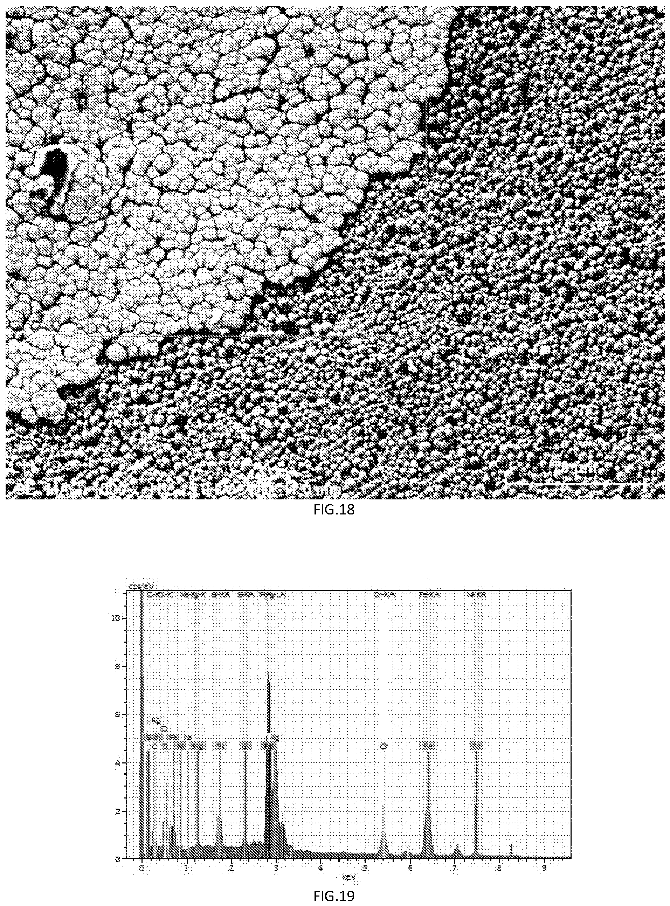

Figure 16 and Figures 17-20 show, respectively, the surface of the sample following upon the leaching L7 and two mappings of the surface of the sample after the leaching test obtained from SEM analysis.

As may be noted from the results of the SEM analysis and the observations of the surface of the sample following upon the dissolution test, solid detachments occurred that exfoliated the membrane. This phenomenon exposed in some areas the metal substrate and in other areas the titanium barrier. The low concentration of iron in solution (Table 14), as shown from the results of the AAS analysis, highlights how the nitric-acid based solution attacks to a clearly lesser extent the steel substrate as compared to a solution with the same concentration of hydrochloric acid (Table 7, leaching L1).

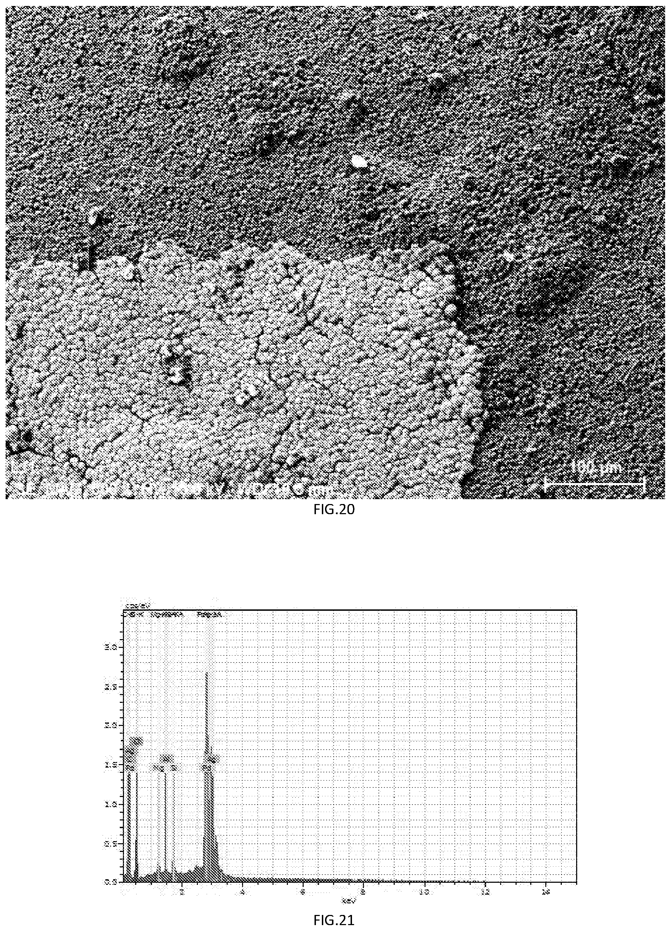

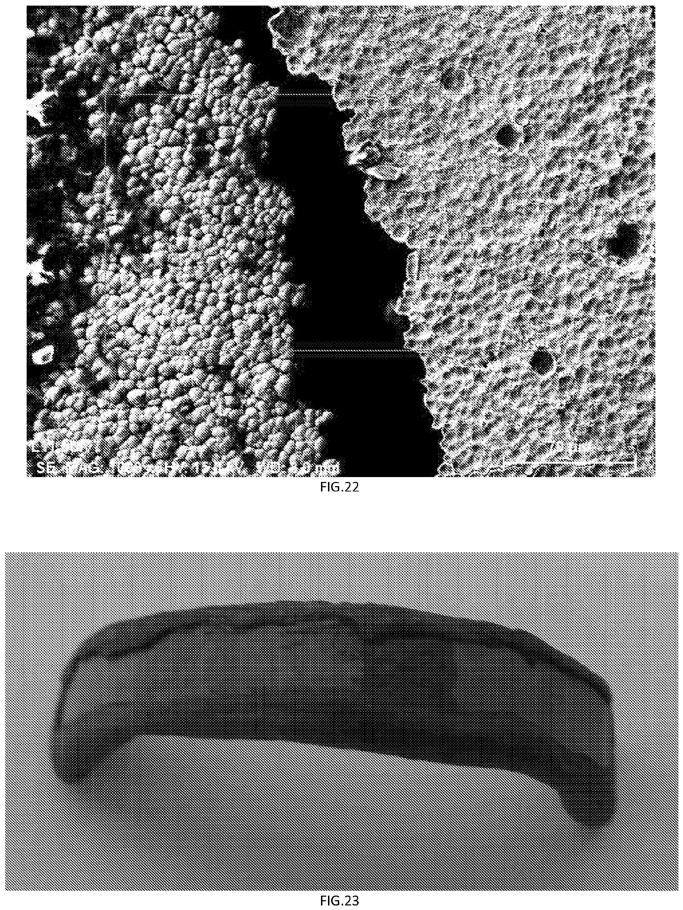

The detachment of the surface coating was subjected to SEM investigation. The results are provided in Figures 21 and 22. The fragments analysed under the SEM, coming from the leaching test 11, were constituted above all by the Pd/Ag membrane.

### Leaching L8: 4M HNO₃

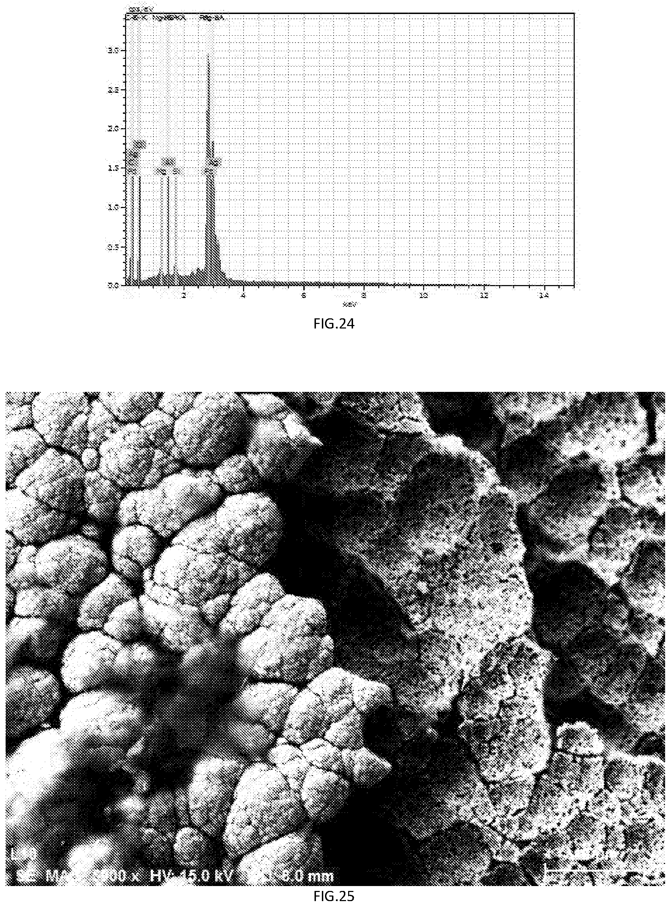

Figure 23 and Figures 24 and 25 show, respectively, the surface of the sample following upon the leaching L8 and the results of the SEM analysis of the sample following upon the test.

In this test, conducted at a higher concentration of nitric acid (4M) than in the previous test, there was noted a more conspicuous phenomenon of detachment of the coating and a smaller yield of dissolution of palladium and silver initially present on the sample. This may suggest that the fragments, once detached from the solid dissolve less easily.

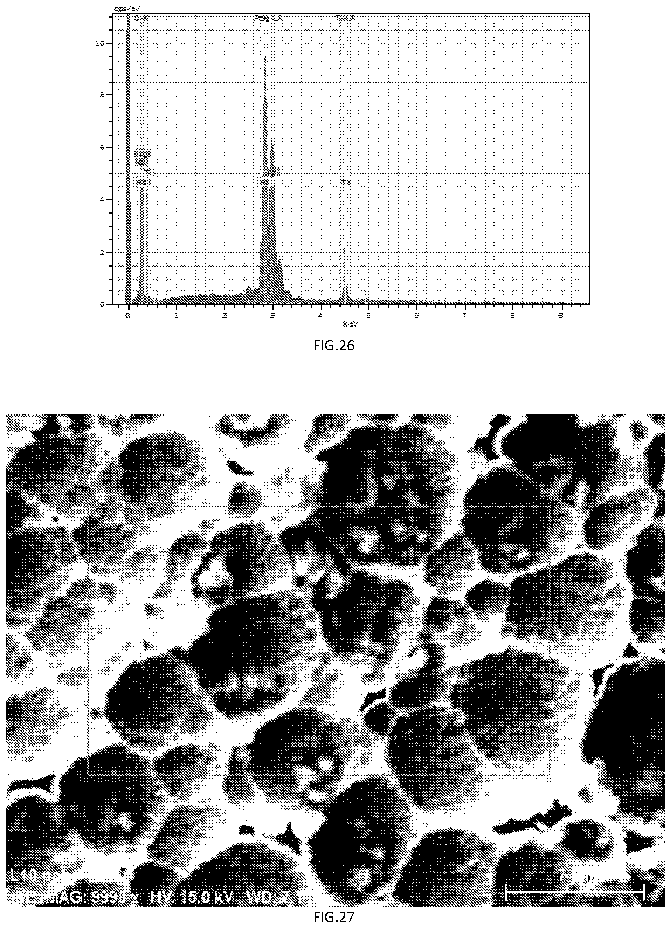

These fragments were subjected to SEM analysis. The results of the investigation are provided in Figures 26-27.

The solid residue is constituted by palladium, silver, and titanium: this highlights how the TiN layer adheres with greater continuity to the membrane rather than to the steel substrate, by virtue of the deposition process itself, which, for the samples treated in the present research, consists of physical vapour deposition (PVD).

### Absorption of Ag and Pd

Among the various metals present in the membranes, Ag and Pd are the most reactive in contact with nitric acid HNO₃. During the leaching process, the metals react to form soluble metal nitrates according to the reactions described below.

Dissolution of Ag depends upon the concentration of nitric acid.

For diluted acid solutions the reaction (1) is obtained:

3Ag + 4HNO₃ → 3AgNO₃ + NO↑ + 2H₂O (1)

Instead, for concentrated solutions the reaction (2) takes place:

Ag + 2HNO₃ → AgNO₃ + NO₂ ↑ + H₂O (2)

But the reaction (3), which is the sum of the two previous reactions, is considered:

4Ag +6HNO₃ → 4AgNO₃ + NO₂ ↑ + NO↑ + 3H₂O (3)

Palladium Pd, instead, follows the dissolution reaction:

3Pd + 8HNO₃ → 3Pd(NO₃)₂ + 2NO↑ + 4H₂O (4)

Instead, for iron (Fe), the following reaction is considered:

Fe + 4HNO₃ → Fe(NO)₃)₃ + NO↑ + 2H₂O (5)

Titanium proves resistant to the oxidizing acids in a wide range of concentrations and temperatures. At high temperatures it is necessary to take into account the corrosion of titanium as a function of the purity of nitric acid. Various metal species such as Si, Cr, Fe or various ions of precious metals (i.e., Pt, Ru), in small amounts, tend to inhibit corrosion, at high temperatures, of titanium in nitric-acid solution.

### [Corrosion resistance of titanium, www.timet.com]

The process scheme presented previously envisages treatment with CaCO₃ and Ca(OH)₂ until a pH value of 7 is reached. This, from the various tests, has proven to be the best scheme in terms of yield of Ca(NO₃) obtained as shown in Table 18 below.

**Table 18 - Results of the experiments at different pH values**

| Nbr. | pH | Fe, mg/L | Ag, mg/L | Pd, mg/L | g of Ca(NO₃)₂ |
|---|---|---|---|---|---|
| | | | | | per 1 L of LL |
| LL | 0.1 | 205 | 17.91 | 25.62 | - |
| 1 | 0.2 | 162 | 2.35 | 25.62 | 24 |
| 2 | 4.1 | 0.218 | 0.83 | 25.60 | 185 |
| 3 | 6.1 | 0.11 | 0.44 | 25.60 | 169 |
| 4 | 7.1 | 0.085 | 0.13 | 25.59 | 206 |
| 5 | 10.6 | 170 | 0 | 25.59 | 188 |

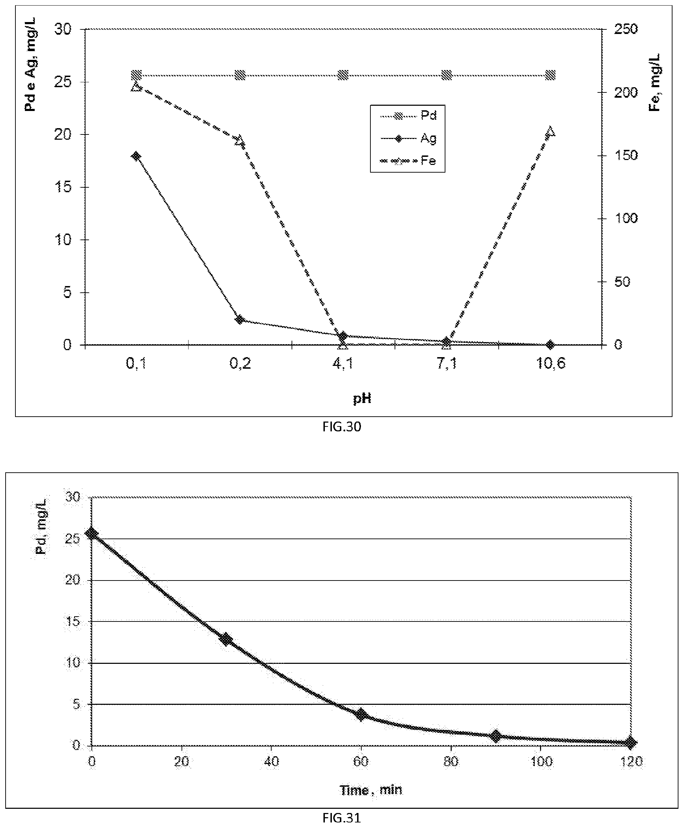

The optimal value of pH is found to be 7, as shown also by Figure 30, which highlights the resistance of Pd to the treatment.

Introduced into a batch reactor was an amount (25 mL) of LL to be treated, coming from the adsorption stage. The solution was brought to a temperature of 50°C and kept there, under stirring. Solid CaCO₃ was added, until a 100% conversion was reached (CO₂ was no longer produced): added amount = 3.9 g. Next, 10% Ca(OH)₂was added to this solution to reach a pH of 7.

To remove the Pd from the LL prior to neutralization, a stage of adsorption on carbon was studied. Absorption is characterized by a high efficiency and selectivity. However, the industrial implementation requires sorbents that have a low cost and are readily available and can be easily regenerated: this is why natural carbon is studied as sorbent.

It is important to determine the possible formation of complexes that are a function of the concentration of nitric acid HNO₃ :
- C_{HNO3} > 1 mol/L: [PdNO₃]⁺ complexes (mono complexes) are present
- C_{HNO3} < 1 mol/L: complexes with formula [Pd(OH)ₙ]⁽²⁻ⁿ⁾⁺_{aq} (hydro-oxo-complexes) are present [P.I. Antyukhin, Sibirskiy Khimicheskiy Zhurnal 1, 21 (1993)]

Since the concentration of nitric acid in the LL is 2.6 mol/L (the initial concentration of nitric acid is calculated by means of titering with NaOH (0.1M)) it may be concluded that hydro-oxo-complexes (polymeric forms) of palladium are absent.

The concentration of Pd in the LL before and after absorption is determined with the atomic-absorption (AA) method.

The conditions studied are:
- batch reactor
- 1 g of carbon
- 50 mL of LL solution
- a magnetic stirrer thermostatted at 20°C
- equilibrium determined with test: 2h

The results prove the effectiveness of the removal and are given hereinafter (Figure 31).

### Production of Ca(NO₃)₂

Next, filtration is conducted to separate the liquid containing the fertilizer Ca(NO₃)₂ from the solid. It is carried out using simple paper.

The filtrate is brought to 100°C to enable evaporation of the water and thus obtain only the (liquid) fertilizer, which is then set in the moulds and made to solidify.

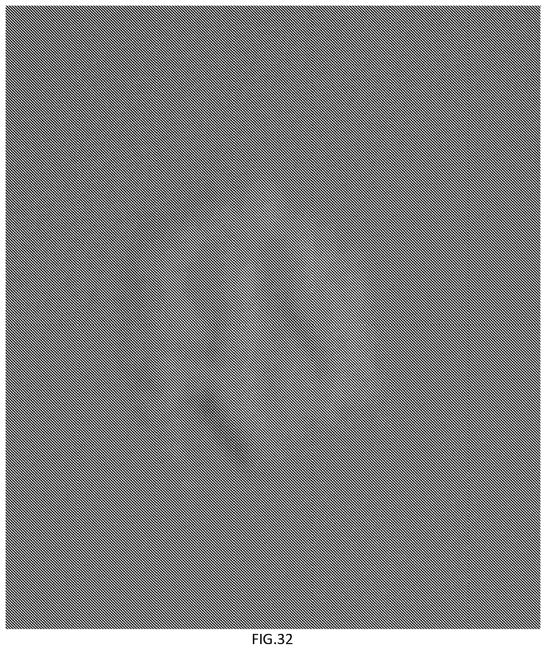

The precipitate that is obtained after the treatments is represented hereinafter (Figure 32).

The theoretical value of Ca(NO₃)₂ that is obtained is 216.2 g starting from 1l of LL. From a fluorescence analysis (XRF) it was found that the final compound has a content of calcium Ca equal to 98.56% (w/w) approximately.

### Conclusions

In order to identify the most suitable conditions for recovery of the substrate of the metal membranes, the first step was to determine the reagents and their optimal compositions for leaching of palladium and silver. Planning of the leaching tests was supported by bibliographic search and led to identification of the following alternatives as regards the reagents to be used in leaching of the metals:
- dissolution of palladium: HCl+H₂O₂ in distilled H₂O ;
- non-conventional dissolution of silver: (NH₄)₂S₂O₃, CuSO₄, (NH₄)₂SO₄, NH₄OH, distilled H₂O; (NH₂)₂CS, Fe₂SO₄, H₂SO₄, distilled H₂O or else HNO₃ in distilled H₂O;
- traditional dissolution of silver: HNO₃+H₂O₂ in distilled H₂O; it was decided to conduct tests with a more traditional solvent, after unsatisfactory results were obtained with the other leaching solutions analysed.

The choice aimed at reagents such as thiosulphate and thiourea is motivated by the trend of the latest studies, whereby pollutant reagents such as cyanides, usually employed for dissolution of Au and Ag, are replaced with substances that are more environmentally friendly. In the course of the tests with said non-conventional solvents, however, there were obtained rather low dissolution yields. This has motivated the choice of using, in the experimentation, more traditional solvents for leaching of silver, such as HNO₃, then testing its effectiveness also for leaching of palladium.

From the results of extraction yield of palladium and silver, estimated via AA analysis and SEM analysis of the samples subjected to leaching (which are strictly qualitative since they refer to a small portion of sample), the evaluations listed below were made.
- The tests of extraction of palladium with the solutions with higher concentrations of hydrochloric acid showed detachment of the Pd/Ag coating and of the TiN layer from the surface of the sample. In particular, it was noted how the titanium-nitride layer remained adherent to the membrane rather than to the steel substrate, by virtue of the process of deposition of these layers on the substrate itself. This exfoliation "exposed" the substrate, rendering it subject to attack by the chloride-based leaching solution in a preferential way, as witnessed by the low concentration of palladium in solution and the high amount of iron dissolved.
- As regards extraction of silver with reagents such as thiosulphate and thiourea, the SEM analysis confirmed the presence of the Pd/Ag membrane on the sample even after the treatment. This qualitative analysis functions as confirmation of the fact that the leaching solutions so far tested dissolved very extremely small amounts of silver. There was moreover noted the presence of precipitates in the tests of extraction of this metal, which could indicate a removal thereof from the membrane greater than what would be deduced from the results obtained by AAS analysis. Also in this case silver detached from the membrane without being dissolved.
- The solution that currently provides the best yields of leaching of the metals is the one that envisages use of a traditional solvent, HNO₃, which was taken into consideration after extremely low values of concentration of Pd and Ag in solution were found in the case where solutions with a base of hydrochloric acid, thiourea, and thiosulphate were used. From the AAS and SEM analyses it was found that, with the increase in concentration of the acid, there was an increase in detachment of the coating from the surface of the sample, as the test proceeded. Analysing said solid residue it was found that it was constituted both by the palladium and silver layer and by titanium nitride, hence showing a greater affinity of the intermetal barrier for the membrane rather than for the substrate on which it adheres. Notwithstanding the progressive exposure of the substrate to the leaching solution caused both by leaching of the Pd/Ag membrane and of Ti and by the progressive detachment of solid material from the surface, rather limited values of iron in solution were obtained.
- The LL is finally treated with carbon, CaCO₃, and Ca(OH)₂ for neutralization of HNO₃ and removal of Ag, Pd, and Fe in order to obtain a marketable fertilizer, namely, high-purity calcium nitrate Ca(NO₃)₂.

## Claims

1. A process for recovery and recycling of materials constituting membranes for separation of hydrogen, **characterized in that** it comprises:
a leaching stage (LA), where, in order to obtain maximum dissolution of silver and palladium, minimizing dissolution of iron, which is an index of deterioration of the metal substrate, the membrane module is leached in a acid solvent so as to obtain a treated membrane sample in which damage to the metal substrate is negligible; and
a second stage, where the leaching liquor is treated to obtain calcium nitrate Ca(NO3)2 after removal both of Pd and of the Ag and Fe salts present,
wherein the acid solvent in the first stage is an aqueous solution: 1-6M of HNO3 + 0.5-4vol% of H2O2 (30vol% solution), preferably 3M of HNO3 + 1vol% of H2O2 (30vol% solution).

2. The process as per Claim 1, wherein the leaching reactor is a discontinuous reactor, in which the temperature is regulated by a thermostat between 30°C and 80°C, preferably at 60°C.

3. The process as per Claim 1, wherein the contact time between the solid and the leaching medium is comprised between 1 h and 6 h, preferably 3 h 30 min.

4. The process as per Claim 1, wherein the leaching reactor is **characterized by** an optimized leaching yield obtained by introduction of an appropriate system capable of bestowing upon the leaching medium a speed such that it enters into turbulent motion.

5. The process as per Claim 1, wherein treatment of the leaching liquor envisages the following steps:
a) treatment with activated carbon at 20-25°C for removal of the Pd present in the leaching liquor by introducing into a batch reactor the necessary amount of carbon and the leaching liquor to be treated, kept under stirring by means of a stirrer at the constant temperature of 20-25°C;
b) neutralization of the remaining solution obtained after filtering of the activated carbon with CaCO3 at 50°C necessary for removal of Fe and Ag nitrates by precipitation of the respective carbonates in a pH range comprised between 0.1 and 6, and filtering of the suspension;
c) regulation of the pH with 10% Ca(OH)2 of the solution filtered in step b) so as to bring the pH to values close to 7 to enable further precipitation of the Fe-based and Ag-based compounds and to neutralize the solution, thus producing calcium nitrate in solution;
d) filtering for separation of the sludge, which is chiefly made up of the metal precipitates, from the liquid; and
e) evaporation at 100°C of the filtrate coming from step d) to obtain the final desired Ca(NO3)2 compound in solid form (desiccation).

## Patentansprüche

1. Verfahren zur Rückgewinnung und Wiederverwertung von Materialien, die Membranen zur Trennung von Wasserstoff bilden, **dadurch gekennzeichnet, dass** es Folgendes umfasst:
eine Auslaugstufe (LA), in der, um eine maximale Auflösung von Silber und Palladium zu erhalten bei Minimierung der Auflösung von Eisen, die ein Hinweis auf die Verschlechterung des Metallsubstrats ist, das Membranmodul in einem sauren Lösemittel ausgelaugt wird, um eine behandelte Membranprobe zu erhalten, in welcher der Schaden am Metallsubstrat geringfügig ist; und
eine zweite Stufe, in der die Auslaugflüssigkeit behandelt wird, um Calciumnitrat Ca(NO3)2 nach Entfernen von sowohl Pd als auch den anwesenden Ag- und Fe- Salzen zu erhalten,
wobei das saure Lösemittel in der ersten Stufe eine wässrige Lösung ist: 1-6 M von HNO₃ + 0, 5-4 Vol.-% von H₂O₂ (30 Vol.-% Lösung), vorzugsweise 3 M von HNO₃ + 1 Vol.-% von H₂O₂ (30 Vol.-% Lösung).

2. Verfahren nach Anspruch 1, wobei der Auslaugreaktor ein diskontinuierlicher Reaktor ist, in dem die Temperatur von einem Thermostat zwischen 30 °C und 80 °C, vorzugsweise auf 60 °C, eingeregelt wird.

3. Verfahren nach Anspruch 1, wobei die Kontaktzeit zwischen dem Feststoff und dem Auslaugmedium zwischen 1 Stunde und 6 Stunden, vorzugsweise bei 3 Stunden und 30 Minuten, liegt.

4. Verfahren nach Anspruch 1, wobei der Laugungsreaktor durch ein optimiertes Auslaugergebnis gekennzeichnet ist, das durch Einführung eines geeigneten Systems erhalten wird, das imstande ist, dem Auslaugmedium eine solche Geschwindigkeit zu verleihen, dass es in turbulente Bewegung tritt.

5. Verfahren nach Anspruch 1, wobei die Behandlung der Auslaugflüssigkeit die folgenden Schritte vorsieht:
a) Behandlung mit aktivierter Kohle bei 20-25 °C zur Entfernung des in der Auslaugflüssigkeit vorhandenen Pd durch Einführen der notwendigen Kohlenmenge und der zu behandelnden Auslaugflüssigkeit in einen Chargenreaktor, die mithilfe eines Rührers bei einer konstanten Temperatur von 20-25 °C gerührt werden;
b) Neutralisieren der verbleibenden Lösung, die nach Filtrieren der aktivierten Kohle mit CaCO₃ bei 50 °C erhalten wird, was notwendig ist, um Fe- und Ag-Nitrate durch Abscheiden der jeweiligen Karbonate in einem pH-Bereich zwischen 0,1 und 6 zu erhalten, und Filtrieren der Aufschwemmung;
c) Regulierung des pH-Werts mit 10 % Ca(OH)₂ der in Schritt b) filtrierten Lösung, um den pH-Wert auf Werte nahe 7 zu bringen und eine weitere Ausscheidung von Febasierten und Ag-basierten Zusammensetzungen zu ermöglichen und die Lösung zu neutralisieren, um auf diese Weise Calciumnitrat in Lösung herzustellen;
d) Filtrieren zur Abtrennung der Aufschlämmung, die hauptsächlich aus Metallpräzipitaten besteht, aus der Flüssigkeit; und
e) Verdampfen des aus Schritt d) kommenden Filtrats bei 100 °C, um die endgültige gewünschte Ca(NO₃)₂ Verbindung in fester Form zu erhalten (Austrocknung).

## Revendications

1. Procédé de récupération et de recyclage de matériaux constituant des membranes de séparation d'hydrogène, **caractérisé en ce qu'**il comprend :
un étage de lixiviation (LA), où, afin d'obtenir une dissolution maximale d'argent et de palladium, en minimisant une dissolution de fer, qui est un indice de détérioration du substrat de métal, le module de membrane est lixivié dans un solvant acide de façon à obtenir un échantillon de membrane traité dans lequel des dommages causés au substrat de métal sont négligeables ; et
un second étage, où la liqueur lixiviante est traitée pour obtenir du nitrate de calcium Ca(NO₃)₂ après élimination à la fois du Pd et des sels d'Ag et de Fe présents,
dans lequel le solvant acide dans le premier étage est une solution aqueuse : 1 à 6M de HNO₃ + 0,5 à 4 % en volume de H₂O₂ (solution à 30 % en volume), de préférence 3M de HNO₃ + 1 % en volume de H₂O₂ (solution à 30 % en volume).

2. Procédé selon la revendication 1, dans lequel le réacteur de lixiviation est un réacteur discontinu, dans lequel la température est régulée par un thermostat entre 30 °C et 80 °C, de préférence à 60 °C.

3. Procédé selon la revendication 1, dans lequel le temps de contact entre le solide et le milieu de lixiviation est compris entre 1 h et 6 h, de préférence 3 h 30 min.

4. Procédé selon la revendication 1, dans lequel le réacteur de lixiviation est **caractérisé par** un rendement de lixiviation optimisé obtenu par introduction d'un système approprié capable de conférer au milieu de lixiviation une vitesse telle qu'il se lance dans un mouvement turbulent.

5. Procédé selon la revendication 1, dans lequel le traitement de la liqueur lixiviante prévoit les étapes suivantes :
a) le traitement avec du charbon actif à 20 à 25 °C pour l'élimination du Pd présent dans la liqueur lixiviante par introduction dans un réacteur discontinu de la quantité nécessaire de carbone et de la liqueur lixiviante à traiter, maintenue sous agitation au moyen d'un agitateur à la température constante de 20 à 25 °C ;
b) la neutralisation de la solution restante obtenue après filtration du charbon actif avec du CaCO₃ à 50 °C nécessaire pour l'élimination des nitrates de Fe et d'Ag par précipitation des carbonates respectifs dans une plage de pH comprise entre 0,1 et 6, et filtration de la suspension ;
c) la régulation du pH avec du Ca(OH)₂ à 10 % de la solution filtrée à l'étape b) de façon à amener le pH à des valeurs proches de 7 pour permettre une précipitation plus poussée des composés à base de Fe et à base d'Ag et neutraliser la solution, produisant ainsi du nitrate de calcium en solution ;
d) la filtration pour séparation de la boue, qui est surtout constituée des précipités de métal, d'avec le liquide ; et
e) l'évaporation à 100 °C du filtrat provenant de l'étape d) pour obtenir le composé Ca(NO₃)₂ souhaité final sous forme solide (dessiccation).
